# EUROPÄISCHE PATENTSCHRIFT

(11) **EP 1 195 585 B1**
(45) Veröffentlichungstag und Bekanntmachung des Hinweises auf die Patenterteilung: **16.04.2003**
(21) Anmeldenummer: 01203643.0
(22) Anmeldetag: 24.09.2001
(51) Int. Cl.: G01G 21/28

(54) **Waage mit Wägeraum**
Scale with weighing place
Balance avec un espace de pesage

(30) Priorität: 04.10.2000 CH 19582000
(43) Veröffentlichungstag der Anmeldung: 10.04.2002
(60) Teilanmeldung: 02102676.0
(73) Patentinhaber: Mettler-Toledo GmbH, 8606 Greifensee (CH)
(72) Erfinder: Lüchinger, Paul, 8610 Uster (CH); Fringeli, Eduard, 8606 Bubikon (CH); Meister, Beat, 8606 Greifensee (CH)

(56) Entgegenhaltungen:
- EP-A- 0 234 008
- EP-A- 0 574 668
- DE-U- 9 407 984
- GB-A- 2 246 446

## Beschreibung

Die Erfindung bezieht sich auf eine Waage mit einem Wägeraum, der teilweise von einem feststehenden Teil der Waage begrenzt ist sowie von mindestens einer Seitenwand, einer Vorderwand und einer Abdeckwand, wovon mindestens eine der Wände zum Öffnen und Schliessen des Wägeraumes mittels einer Führungsvorrichtung bewegbar ist.

Eine solche Waage ist beispielsweise aus der EP-A-0 234 008 bekannt. Dabei handelt es sich um eine Waage mit einer Waagschale und mit einem die Waagschale allseits umschliessenden Wägeraum, mit einem feststehenden Frontglas, je einer seitlich nach hinten verschiebbaren Schiebetür, einer nach hinten verschiebbaren oberen Abdeckung und einer die Schiebetüren mit der oberen Abdeckung verbindenden Halterung, wobei sich die Halterung beim Öffnen und Schliessen der Seitenwände und/oder der Abdeckwand mittels Lager mit diesen mitbewegt und somit den Zugang zum Wägeraum, ohne behindernde Stege an den Seiten vollständig freigeben kann. Auch können die beiden Seitenwände einzeln oder synchron gemeinsam mit oder ohne die Abdeckwand verschoben werden. Die Verschiebung kann motorisch erfolgen oder von Hand, wobei bei Handbetrieb die zu verschiebenden Scheiben vom Antrieb abgekoppelt werden.

In der EP-A-0 574 668 ist eine Waage offenbart mit einer oberen Abdeckwand eines Windschutzgehäuses, die mit Hilfe einer manuell betätigbaren Verriegelung befestigbar bzw. abnehmbar ist. Nach Abnahme der Abdeckwand ist es möglich sowohl die Vorderwand als auch die Seitenwände zum Zwecke der Reinigung vollständig aus dem Gehäuse zu entfernen. Bei dieser bekannten Ausführung ist die Abdeckwand Teil eines das Windschutzgehäuse zusammenhaltenden Rahmens, der allerdings den darunter liegenden Wänden eine gewisse Stegfreiheit, und damit eine bessere Sicht auf das Innere des Windschutzgehäuses, zugesteht, allerdings für manche Anwendungen noch nicht ganz befriedigend ist. Denn zum einen ist es nicht möglich, auf den oberen Rahmen zu verzichten, zum anderen bedingt diese Ausführung auch eine gewisse Manipulation an den Riegeln, die mit hoher Präzision gefertigt sein müssen, um mit den sie aufnehmenden Ausnehmungen zu fluchten.

Nach dem Stand der Technik ist der flexible Zugang für Leitungen, Schläuche etc. bislang meistens verbunden mit dem zumindest teilweise Offen-belassen einer verschiebbaren Seitenwand oder der Abdeckung während des Wägevorgangs, da starre Rahmenkonstruktionen und aufwendige Führungsvorrichtungen keine individuellen und leicht zugänglichen Durchführungen in den Wänden erlauben. Ein Offen-belassen einer Wand kann jedoch das Wägeresultat verfälschen.

Die wesentlichen Nachteile der bekannten Waagen bestehen darin, nur eine beschränkte freie Zugänglichkeit des Wägeraumes bei gleichzeitig freier Sicht in den Wägeraum und umgekehrt zu besitzen. Die Zugänglichkeit von der Seite und von oben und gleichzeitig von vorne ist nicht gegeben, insbesondere gilt dies auch für die Zugänglichkeit für Zufuhrleitungen. Darüber hinaus ist die Reinigung des Wägeraums schwierig.

Der Erfindung liegt daher die Aufgabe zugrunde, eine freie Sicht auf die Waagschale und eine gute Zugänglichkeit des Wägeraums in einfacher Weise bzw. mit geringem Manipulationsaufwand sowohl im offenen Zustand der Wände, beispielweise beim Beschicken der Waage, als auch im allseits geschlossenen Zustand für die Zuführung von Zuleitungen zu sichern und ebenso eine Möglichkeit der Reinigung zu schaffen, die einen geringen Aufwand erfordert.

Diese Aufgabe wird erfindungsgemäss mit den Merkmalen des Anspruchs 1 gelöst.

Eine Waage mit einem Wägeraum, der teilweise von einem feststehenden Teil der Waage begrenzt ist sowie von mindestens einer Seitenwand, einer Vorderwand und einer Abdeckwand, wovon mindestens eine der Wände zum Öffnen und Schliessen des Wägeraumes mittels einer Führungsvorrichtung bewegbar ist, weist, in die Führungsvorrichtung integriert, eine Halterung für die mindestens eine bewegbare Wand auf und in dem feststehenden Teil je eine Halterung für jede nicht bewegbare-Wand. Die Halterungen halten beziehungsweise geben die jeweilige Wand frei mittels eines durch eine einfache, auf die Wand und/oder die Halterung einwirkende Betätigung ver- und entriegelbaren Formschlusses.

Die Seitenwände, die Vorderwand und die Abdeckwand lassen sich einzeln von Hand durch eine einfache Schwenkbewegung nach aussen mit leichtem Zug von der Waage trennen, z. B. um die in der Regel aus Glas bestehenden Scheiben leicht reinigen zu können. Die Wände sind in der Gebrauchslage in den Führungselementen formschlüssig verriegelt. Die Entriegelung erfolgt für alle Wände durch eine einheitliche Handbewegung. Dadurch, dass die Halterungen für die bewegbaren Wände in die Führungsvorrichtungen integriert sind, ist neben der Zerlegbarkeit zum Zwecke der Reinigung eine freie Zugänglichkeit des Wägeraums gewährleistet, wobei auch im geschlossenen Zustand des Wägeraums keine sichtbehindernden Stege vorhanden sind.

Vorteilhaft weist mindestens eine der Halterungen einen Rastkörper zum selbsttätigen Einrasten der entsprechenden Wand auf. Vorzugsweise ist der Rastkörper an dem als Rückwand ausgebildeten feststehenden Teil der Waage befestigt und dient dem Haltern und Führen beispielsweise der Seitenwände.

Durch das Vorhandensein mindestens eines Rastkörpers, in den beispielsweise die Seitenwände in der Gebrauchsstellung eingerastet sind, wird die gewünschte Stegfreiheit besonders begünstigt. Eine Rahmenkonstruktion, wie beim Stand der Technik ist nicht erforderlich. Ein Rastkörper kann manuell betätigbar sein. In der Regel rastet die jeweilige Wand durch Andrücken oder Wegziehen selbsttätig ein bzw. aus. Ein Rastkörper ist derart ausgestaltet, dass für das Herausziehen einer eingerasteten Wand, beispielsweise einer Seitenwand, eine höhere Kraft benötigt wird, als jene für das Einrasten der Wand und somit der Wand in der Halterung eine hohe Stabilität verliehen wird. Die besondere Gestalt der Rastkörper und ihre Ausführung als einteiliger Kunststoffkörper gewährleisten eine besonders günstige Herstellung.

Zum Schutz vor störendem Luftzug, der an den Kanten des Aufeinandertreffens zweier Wände des Wägeraums in diesen eindringen könnte, ist in einer weiteren Ausgestaltung der erfindungsgemässen Waage entweder die eine Wand mit einer rechteckigen Vertiefung, in welche die andere Wand eingreift, oder eine Wand mit einer Blende versehen, die einen sich möglicherweise zwischen beiden Wänden bildenden Spalt überdeckt.

In einer bevorzugten Ausgestaltung der Waage sind Antriebsmittel für die Verschiebung der mindestens einen bewegbaren Wand vorhanden. Vorzugsweise sind die Antriebsmittel als Seilzüge ausgebildet.

Die Führungsvorrichtungen, an denen die bewegbaren Wände der Waage lösbar befestigt sind, sind mit Kupplungen versehen, die jede Wand für sich mit dem jeweiligen Antriebsmittel verbinden oder trennen. Dabei sind Hebel für die Kupplungen vorhanden, für die manuelle Betätigung der Kupplungen. Somit sind die Seitenwände und/oder die Abdeckwand einzeln, gemeinsam oder in jeder denkbaren Kombination antreibbar. Alle Kombinationen sind denkbar, etwa eine Seitenwand wird alleine geschlossen oder geöffnet oder die Abdeckung wird alleine betätigt etc. Vorteilhaft weisen die Kupplungen Mitnehmer auf und sind so ausgebildet, dass der Kupplungsvorgang selbstfindend erfolgt. Sind beispielsweise eine oder beide der Seitenwände entkuppelt, kann durch Handhabung der an der Seitenwand befindlichen Kupplungsbetätigung die Kupplung bei der Bewegung des dazugehörigen Mitnehmers in diesen selbstfindend an geeigneter Stelle einklinken.

In einer vorteilhaften Ausbildung der erfindungsgemässen Waage werden die Antriebsmittel von einem einzigen Motor angetrieben.

Gemäss einer weiteren Ausgestaltung der Erfindung können die Seitenwände gegenüber der Abdeckwand unterschiedliche Schliess- bzw. Öffnungswege und zur synchronen Bewegung die Antriebsmittel entsprechende Übersetzungen aufweisen. Damit bei Anwendung eines einzigen Motors für die verschiedenen Antriebsmittel die Seitenwände und die Abdeckwand gleichzeitig geöffnet bzw. geschlossen werden können, sind entsprechende Übersetzungen vorgesehen.

Die Waage weist vorzugsweise einen Griff auf, der als Handgriff zum Tragen der Waage dient. Damit kann beispielsweise die Waage mit einer Hand angehoben werden und die darunter liegende Tischfläche mit der anderen Hand gereinigt werden. In besonderer Weise dient der Griff gleichzeitig auch als Schiene für das Führungselement der Abdeckwand, wobei an dem Griff eine Führungsvorrichtung angeordnet ist. Die Führungsvorrichtung weist in einer vorteilhaften Ausgestaltung einen senkrechten Grundkörper auf, wobei im oberen und unteren Bereich jeweils mindestens eine Zahnstange mit mindestens einem Zahnrad angeordnet ist und vorteilhaft ein senkrechter Grundkörper seitlich gleitend oder mittels Führungsrollen geführt sein kann. Um die Führungseinrichtung der Abdeckwand so kurz wie möglich zu gestalten, wurde eine senkrechte Konstruktion gewählt.

Gemäss einer besonders bevorzugten Ausführungsform sind in den Seiten der Seitenwände, der Vorderwand, der Abdeckwand und/oder der Rückwand Aussparungen zur Durchführung von Leitungen vorgesehen, wobei die Aussparungen mittels Clips gegen Windzug verschliessbar sind. Damit bietet sich eine Vielzahl von Anwendungsmöglichkeiten der Waage an, insbesondere deren Verwendung als Experimentierwaage mit welcher unter Beobachtung von Gewichtsveränderungen mit dem Wägegut experimentiert, beispielsweise dosiert oder eine chemische Reaktion durchgeführt werden kann. Die weitgehende Rahmenfreiheit der Wände und die Möglichkeit, sie in eine stabile Schräglage zu bringen, (dadurch, dass beispielsweise die Seitenwände in einfacher Weise aus den Rastkörpern gelöst und nach aussen geschwenkt werden können, gleichzeitig jedoch noch in formschlüssiger Verbindung mit den Führungseinrichtungen der Wände verbleiben) liefert einen einfachen Weg, elektrische Versorgungsleitungen oder Datenleitungen oder auch Zuführungen für andere Medien (Flüssigkeits- oder Gasleitungen) in die Aussparungen einzulegen und gegebenenfalls mittels spezieller Clips in den Durchführungen noch zu fixieren und jene gegen Zugluft abzudichten. Spezielle Ausführungsformen der Clips, beispielsweise als Halterungen, erweitern das Spektrum ihrer Verwendbarkeit.

In einer speziellen Ausgestaltung der Erfindung verfügt die Waage über eine Zusatzeinheit, die sich beispielsweise sich am hinteren Ende der Waage befindet. Diese Zusatzeinheit enthält Versorgungseinheiten und/oder Steuerungseinheiten. Die mit Durchführungen an dieser Einheit verbundenen Leitungen können über spezielle am Waagengehäuse angebrachte Führungsrinnen den Aussparungen in den Wänden der Waage zugebracht werden. Damit kreuzen sie nicht störend den Verschiebeweg der Seitenwände.

Weitere Einzelheiten der Erfindung ergeben sich an Hand der nachfolgenden Beschreibung von in den Zeichnungen schematisch dargestellten Ausführungsbeispielen. Es zeigen:
- Fig. 1: eine erfindungsgemässe Waage in Perspektive von vorne,
- Fig. 2a und 2b: die Kantengestaltung im Bereich aufeinander treffender Wände im Schnitt,
- Fig. 3a bis 3c: die Art der Befestigung der Vorderwand des Wägeraumes in drei verschiedenen Positionen im Schnitt,
- Fig. 4: eine erste Alternative und
- Fig. 5: eine zweite Alternative der Wandbefestigung, im Schnitt,
- Fig. 6: eine Zeichnung des Wägeraumes in einer Ansicht entsprechend dem Pfeil VI der Fig. 1,
- Fig. 7: das Detail VII der Fig. 6,
- Fig. 8: das Detail VIII der Fig. 6,
- Fig. 9: das Detail IX der Fig. 6,
- Fig. 10: die Waage in einer Perspektive im Sinne des Pfeils II der Fig. 1, jedoch bei abgenommenem Gehäuse,
- Fig. 11: eine Schnittansicht durch den unteren Teil der Waage von vorne,
- Fig. 12a bis 12d: eine Kupplungsvorrichtung für die Seitenwände in verschiedenen Ansichten,
- Fig. 13: eine Schnittansicht der Führung und des Antriebes der Abdeckwand,
- Fig. 14: eine Seitenansicht des Antriebes für die Abdeckwand,
- Fig. 15: eine schematische Darstellung des Gesamtantriebes,
- Fig. 16a und 16b: eine Befestigungsausführung für das Seil, a: in Seitenansicht und b von vorne,
- Fig. 17: eine mögliche Anwendung der Aussparungen in der Rückwand, Ansicht von oben,
- Fig. 18: eine mögliche Anwendung der Clips als Halter, Ansicht von vorne,
- Fig. 19: eine mögliche Anwendung der Clips für eine Ausführungsform der Waage mit niedrigeren Scheiben, im Schnitt,
- Fig. 20: eine Waage von schräg hinten mit Zusatzeinheit, Haltevorrichtung und Führungsrinnen in 3-dimensionaler Darstellung.

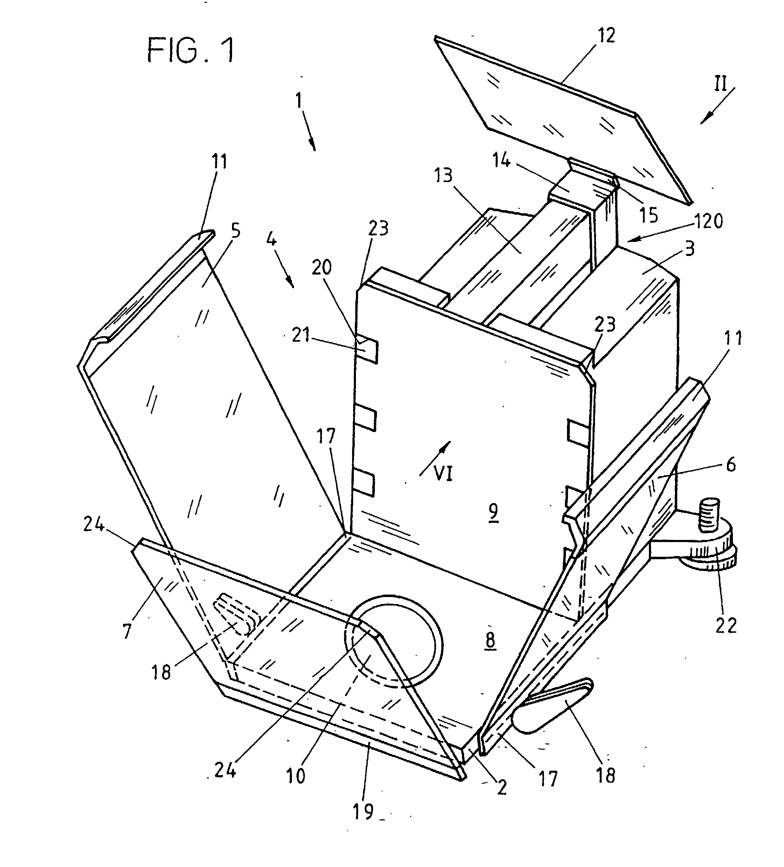

Eine Waage 1 gemäss Figur 1 besteht aus einem, die Rückwand 9 und den Boden 8 des Wägeraums 4 bildenden feststehenden Teil, welcher sich aus einem einen Teil der Wägetechnik enthaltenden Bodenraum 2 und einem im wesentlichen die Antriebsmechanik enthaltenden Gehäuse 3 zusammensetzt, sowie dem Wägeraum 4. Der Wägeraum 4 wird weiterhin, als Windschutz dienend, von den Seitenwänden 5, 6 der Vorderwand 7 und der Abdeckwand 12 eingeschlossen. Der Boden 8 enthält eine Durchführung für den Träger der Waagschale 10. Allerdings kann die Waagschale auch auf einem L-förmigen Träger, der an einer aus der Rückwand des Wägeraums ragenden Koppelanordnung angebracht ist, aufliegen, wie dies in der parallel angemeldeten Schrift CH-1957/00 beschrieben ist. Ebenso sind die verschiedenen in der genannten Schrift beschriebenen Ausgestaltungen der Waagschale und/oder der Merkmale des Wägeraums auch für die hier beschriebene Waage anwendbar.

Die Waage 1 steht vorzugsweise auf drei Füssen 22.

Die Seitenwände 5, 6, die Vorderwand 7 und die Abdeckwand 12 bestehen aus durchsichtigem Material, vorzugsweise aus Glas. Eine Ausführung aus gehärtetem Glas ist ebenfalls möglich, insbesondere für Anwendungen, bei welchen es gilt, die Sicherheit hinsichtlich des Umgangs in einer rauen Umgebung zu erhöhen oder die Handhabung, beispielsweise durch das Reinigen in einer Maschine zu verbessern.

Die Seitenwände 5, 6 und die Abdeckwand 12 sind mittels eines Antriebs, beispielsweise eines Seilzugantriebs, zum Öffnen und Schliessen des Wägeraums bewegbar. Die Seitenwände 5, 6 und die Abdeckwand 12 sind jeweils lösbar an einer Führungsvorrichtung 17, 120 mit Hilfe von in die Führungsvorrichtungen 17, 120 integrierten Halterungen befestigt. Die Vorderwand 7 ist, ebenfalls lösbar, an einer Halterung 19 befestigt.

Durch eine leichte Schwenkbewegung sind die Seitenwände 5, 6, die Vorderwand 7 und die Abdeckwand 12 in einfacher Weise zum Reinigen aus ihren Halterungen zu entfernen.

In ihrer Offenstellung umschliessen die Seitenwände 5, 6 sowie die Abdeckwand 12 das Gehäuse 3. Dies ist deshalb möglich, weil das Gehäuse 3 in seiner Breite und seiner Höhe kleiner ausgestaltet ist als der Wägeraum 4.

Die Führungsvorrichtungen 17, 120 der Seitenwände 5, 6, sowie der Abdeckwand 12 sind mit Kupplungselementen (in Figur 1 nicht sichtbar) versehen, die der Verbindung der Seitenwände 5, 6 und der Abdeckwand 12 mit den Seilzügen eines Antriebs dienen. Jede Seitenwand 5, 6 ist separat mit einer Kupplungsbetätigung 18 versehen, ebenso die Abdeckwand 12 (in Figur 1 nicht sichtbar). Die Funktionsweise der Kupplungen und des Antriebes wird weiter unten beschrieben. Auf diese Weise sind alle denkbaren Kombinationen: einzeln, teilweise oder alle zusammen, des Schliessens und Öffnens der Seitenwände 5, 6 und der Abdeckwand 12 möglich.

Am oberen Ende des Gehäuses 3 besitzt die Waage 1 einen Griff 13. Neben der Tragefunktion hat der Griff 13 noch die Funktion einer Führungsschiene für das Öffnen und Schliessen der Abdeckwand 12. Über diese Schiene wird ein Führungselement 14 der Führungsvorrichtung 120 geführt, wobei die Halterung 15 der Abdeckwand 12 mit dem Führungselement 14 verbunden ist. Wie oben schon beschrieben, ist die Halterung 15 für die Abdeckwand 12 derart ausgebildet, dass die Abdeckwand 12 durch eine einfache Schwenkbewegung, beispielsweise zum Reinigen, abgetrennt werden kann.

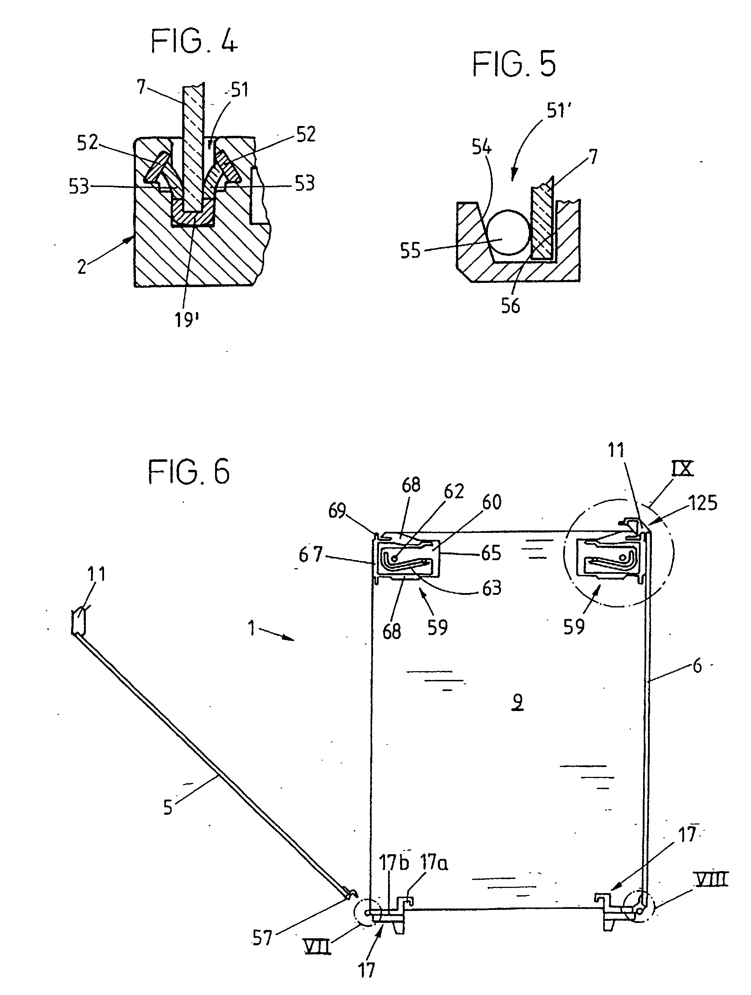

An der Oberkante der Seitenwände 5, 6 sind für deren Halten in Rastverschlüssen (in Figur 1 nicht dargestellt, siehe Figur 6) nach innen geneigte Rahmenleisten 11 vorgesehen, die an den abgeschrägten oberen Ecken 23, 24 der Vorderwand 7 und der Rückwand 9 anliegen. Die abgewinkelten Rahmenleisten 11 können andere obere Endkanten der Seitenwände 5, 6, gegebenenfalls aber auch der Abdeckwand 12, derart überdecken, dass sie für die äussere Luft eine Art Labyrinthdichtung bilden, so dass der Zutritt von Zugluft zum Inneren des Wägeraumes 4 über die Funktion des Windschutzes hinaus weiter erschwert wird. Im übrigen können die Rahmenleisten 11 aus durchsichtigem Material gefertigt sein.

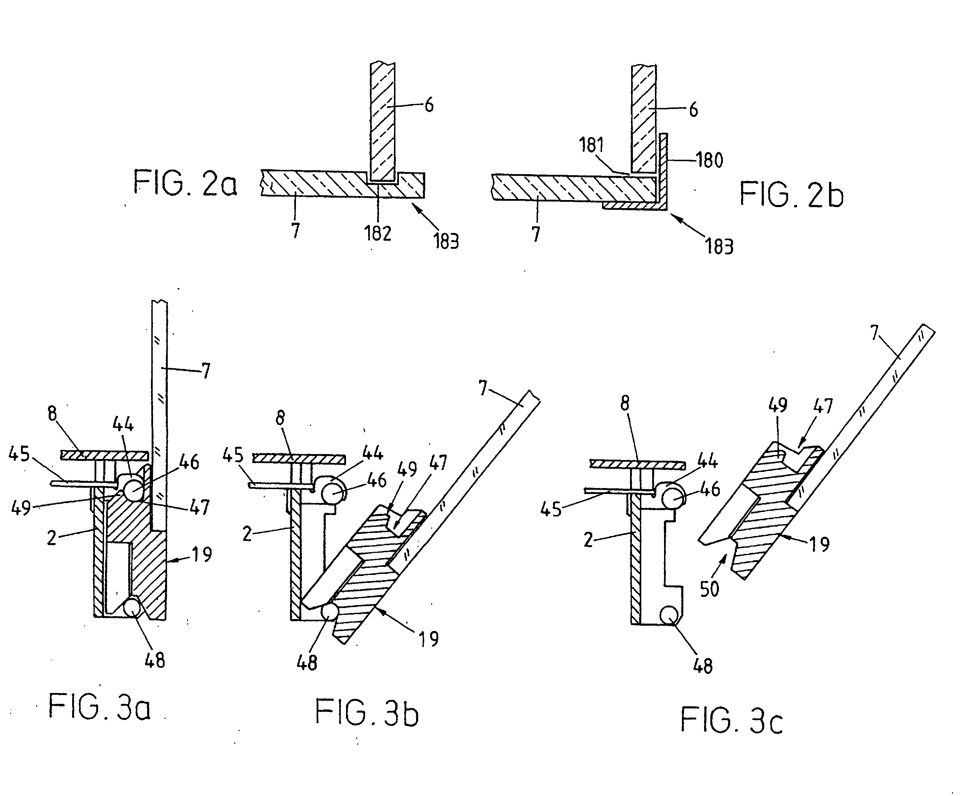

Weiterhin ist es nützlich, den möglichen Zutritt von Zugluft zum Inneren des Wägeraumes 4 durch eine besondere Gestaltung der Kanten, beispielsweise der hinteren und vorderen Kanten der Seitenwände 5, 6 sowie der seitlichen und oberen Kanten der Vorderwand 7 noch weiter zu begrenzen. Dies wird dadurch erreicht, dass für zwei senkrecht aufeinander treffende Wände - in Figur 2a ist die von der Vorderwand 7 und der Seitenwand 6 gebildete Kante 183 des Windschutzes beispielhaft dargestellt - eine der beiden Wände eine Vertiefung 182 mit rechteckigem Querschnitt aufweist, in welche die andere Wand eingreift. Alternativ umfasst eine winkelförmige Blende 180 die Kante einer Wand auf der gesamten Kantenlänge und ragt über die Dicke dieser Wand, an der sie angebracht ist, hinaus, wobei im geschlossenen Zustand des Wägeraums 4 diese Blende 180 einen sich möglicherweise bildenden Spalt 181 zwischen den beiden Wänden abdeckt. Diese Blende 180 kann beispielsweise aus durchsichtigem Kunststoff gefertigt sein, um die freie Sicht in den Wägeraum 4 nicht zu behindern. Die Figur 2b zeigt diese alternative Ausbildung der Kantengestaltung der selben beispielhaft in der Figur 2a dargestellten Kante der Wände des Wägeraums 4. Selbstverständlich muss für das Herausschwenken einer Wand 5, 6, 12 aus ihrer jeweiligen Halterung diese zunächst aus der Vertiefung bzw. aus dem Bereich der Blende durch eine kleine Verschiebung in Richtung ihrer jeweiligen Offenstellung gebracht werden.

An Hand der Figuren 3a - 3c soll nun die Abnahme der Vorderwand 7 von ihrer Befestigung am Bodenraum 2 beschrieben werden. Diese Art und Weise der Befestigung und Wegnahme der Vorderwand 7 ist selbstverständlich auch für die Seitenwände 5, 6 sowie die Abdeckwand 12 anwendbar. Aus Fig. 3c ist ersichtlich, dass an der Unterseite der Vorderwand 7 ein Teil einer Halterung 19 befestigt ist (vgl. auch Fig. 1). Diese Halterung 19 besitzt an ihrer Unterseite eine gabelartige Ausnehmung 50. An der Oberseite der Halterung 19 ist hinter einer Nase 49 eine Einsenkung 47 vorgesehen. Die Nase 49 ist an der Halterung 19 befestigt. Zum Befestigen der Vorderwand 7 wird die gabelartige Ausnehmung 50 auf eine Stange 48 an der Wand des Bodenraums 2 aufgesetzt (Fig. 3b). Dann wird die Vorderwand 7 um die Stange 48 im Gegensinne des Uhrzeigers in die Stellung nach Fig. 3a geschwenkt. An der Unterseite des Bodens 8 befindet sich eine Blattfeder 45 mit einem Rasthebel 44 und einer Rolle 46. Wenn nun die Vorderwand 7 aus der Stellung nach Fig. 3b in diejenige nach Fig. 3a gekippt wird, stösst die Rolle 46 gegen die ihr zugewandte Schrägfläche der Nase 49, wobei der Rasthebel 44 nur so weit angehoben und im Gegenuhrzeigergegensinn verschwenkt wird, bis die Rolle 46 über die Nase 49 gelangen und - wie aus Fig. 3a ersichtlich - in die Einsenkung 47 einfallen kann. Die Vorderwand 7 ist dann mittels der in einem Abstand voneinander gehaltenen Befestigungsteile 50, 48 einerseits und 47, 46 anderseits fest in ihrer Lage gehalten. Es ist ersichtlich, dass somit zum Festhalten der Vorderwand 7 (und ebenso der übrigen Wände 5, 6 und 12 des Wägeraumes 4) keine besondere Betätigungseinrichtung zum Lösen einer Klemmung oder zu ihrem Festklemmen nötig ist. In diesem Sinne ist also die gezeigte Halterung 19, ebenso wie die später noch beschriebenen, betätigungsfrei und dennoch in der Gebrauchslage fest.

Während die Klemmverbindung nach den Figuren 3a bis 3c bevorzugt ist - nicht zuletzt deshalb, weil diese Lösung frei von jeglicher schwer zu reinigenden Nut ist; aber auch weil die in einem Abstand liegenden Befestigungsteile 50, 48 und 47, 46 für grosse Stabilität sorgen -, sollen die Figuren 4 und 5 veranschaulichen, dass diesbezüglich zahlreiche Varianten denkbar und möglich sind. Beispielsweise ist nach Figur 4 in der Wand des Bödenraums 2 eine Nut 51 vorgesehen. In den senkrechten Wänden dieser Nut 51 sind an mindestens einer Seite jeweils eine Schiene 52 der Länge nach durch eine entsprechend ihrem Querschnitt ausgebildete Öffnung eingeschoben, die mit Lippen 53 aus geeignetem elastischen Material, wie z. B. Kunststoff versehen ist. Die Lippen 53 sind vorzugsweise schräg abwärts gerichtet, wie aus Figur 4 ersichtlich ist, obwohl es auch möglich wäre, sie etwa horizontal anzuordnen. Die Vorderwand 7 (es könnte aber auch eine der Seitenwände 5, 6 oder die Abdeckwand 12 sein) besitzt eine Halterung 19'. An dieser über die Ebene der Vorderwand 7 vorragenden Kanten der Halterung 19' stützen sich die Lippen 53 ab. Sobald die Vorderwand 7 einmal in die Nut 51 gesteckt worden ist, klemmen sie sich nach dem Einschnappen hinter ihrer oberen, seitlich vorragenden Seitenfläche widerhakenartig in der gezeigten Lage fest. Der Widerstand gegen Herausziehen der Vorderwand 7 aus der Nut 51 kann durch den Reibungswiderstand der Lippen 53 bzw. ihre Neigung leicht den Erfordernissen angepasst werden.

Im Falle der Figur 5 weist die Nut 51' eine Schräge 54 auf. Wird die Vorderwand 7 in diese Nut 51' gestellt, so braucht an der Seite der Schräge 54 nur eine Klemmrolle 55 (oder deren mehrere) eingesetzt zu werden, damit die Vorderwand 7 fest gegen eine Stützfläche 56 gedrückt wird. Die Stabilität dieser Verbindung hängt von der Höhe der Stützfläche einerseits und der Höhe der Klemmlage der Rolle 55 über dem Grund der Nut 51' ab.

Obwohl jede dieser oben beschriebenen Verbindungen auch für die Seitenwände 5, 6 anwendbar ist, soll an Hand der Figuren 6 bis 9 eine Ausbildung gezeigt werden, die den Vorteil hat, eine Verschiebung der Wand mittels der jeweiligen Führungsvorrichtung 17 (vgl. Fig. 1) auch in festgeklemmter Lage zuzulassen.

Die Figur 6 zeigt eine Vorderansicht der Waage 1 mit Blick auf die Rückwand 9. Die linke Seitenwand 5 ist in gelöster Stellung gezeigt, wohingegen die rechte Seitenwand 6 in geschlossener Stellung mit der Führungsvorrichtung 17 verbunden ist. Die Führungsvorrichtung 17 weist eine Führungsnut 17a und eine Stützfläche 17b auf.

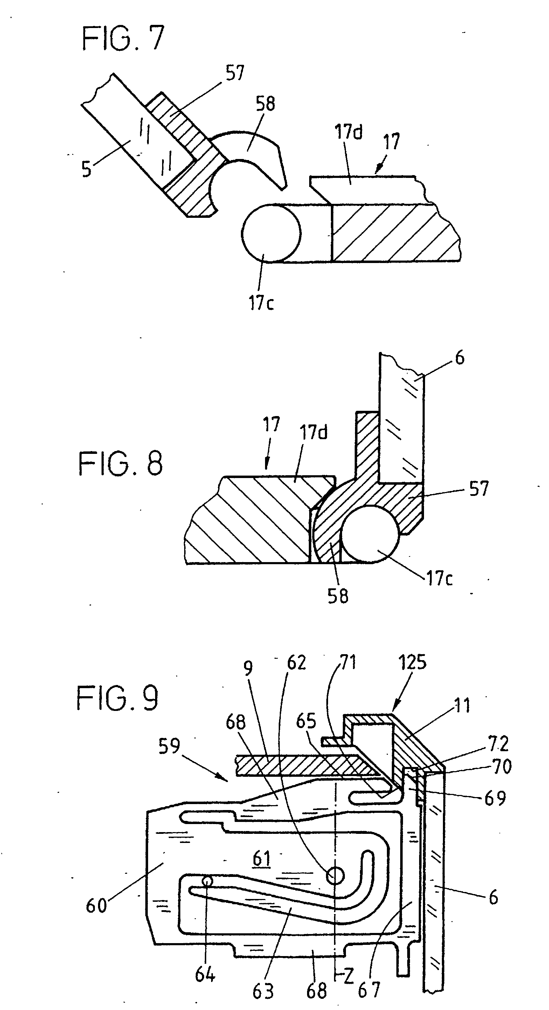

Wie in den beiden Figuren 7 (Ausschnitt VII von Fig. 6 vergrössert) und 8 (Ausschnittvergrösserung VIII von Fig. 6) gezeigt wird, weist die Führungsvorrichtung 17 an ihrem hinteren und vorderen Ende (bezüglich der Sicht auf die Waage gemäss Figur 6) an der Aussenseite jeweils eine Erhebung 17d auf, in die ein zylinderförmiger Gelenkzapfen17c eingearbeitet ist. Dieser Gelenkzapfen 17c ist mit genügendem Abstand angeordnet, so dass ein hakenförmiges Einhängteil 58 in den zylinderförmigen Gelenkzapfen 17c einsetzbar ist. Das Einhängteil 58 ist Bestandteil einer Leiste 57, an der die jeweilige Seitenwand 5 bzw. 6 befestigt ist. Bezüglich dieser Leiste 57 zeigt die Figur 7 einen Schnitt etwa durch die Mitte der Leiste 57, an deren beiden Enden jeweils ein Einhängteil 58, im gleichen Abstand wie jener der oben erwähnten Erhebungen 17d mit den eingearbeiteten Gelenkzapfen 17c, sitzt, wohingegen die Figur 8 einen Schnitt durch eines der Einhängteile 58 am Ende der Leiste 57 selbst veranschaulicht.

Während aber im Falle der Konstruktion nach der Figur 3 zwei voneinander im Abstand befindliche Befestigungsteile 50, 48 und 47, 46 an der Unterseite der jeweiligen Wand des Wägeraumes 4 vorgesehen sind, ist im Falle der in den Figuren 6-9 dargestellten Halterungen für die Seitenwände eine zweite Befestigung an der Oberseite der Wand angeordnet und zwar entweder an der Vorderseite der Rückwand 9, wie in Figur 6 dargestellt, oder an deren Rückseite.

Diese zweite Befestigung weist eine Rasteinrichtung 125 besonderer Konstruktion auf. Ein rahmenartiger und vorzugsweise als einteiliger Kunststoffkörper gespritzter Rastkörper 59 ist, als Ausschnittvergrösserung IX der Figur 6 detailliert in der Figur 9 dargestellt. Im Einzelnen besteht dieser Körper 59 aus einem etwa vertikalen Trägerabschnitt 60 mit einer sich annähernd horizontal von diesem weg erstreckenden Zunge 61. Die Zunge 61 besitzt ein Lagerauge 62, um welches der Rastkörper 59 schwenkbar gelagert ist. Allerdings sind dieser Schwenkbewegung Grenzen gesetzt, dadurch, dass sich die Zunge 61 an einem Abstützbolzen 64 der Wand 9 abstützt. Von der Zunge 61 ausgehend, den Abstützbolzen 64 an seiner Unterseite berührend befindet sich eine erste, relativ steife und sich unterhalb der Zunge 61 etwa parallel erstreckende Feder 63, die vom Abstützbolzen 64 vorgespannt einer Drehung des Rastkörpers 59 im Uhrzeigersinn eine Kraft entgegensetzt. Vom Trägerabschnitt 60 erstrecken sich aber auch noch zwei federnde, zueinander parallele und durch ein Querglied bzw. einen vertikalen Schenkel 67 miteinander verbundene, horizontale Lenker 68. Nicht nur, dass der Ansatz dieser Lenker 68 am Trägerabschnitt 60 dünner ist als der Ansatz der Feder 63 an der Zunge 61, sie sind auch etwas länger als diese, so dass die von ihnen ausgeübte Federkraft vorzugsweise kleiner als die der Feder 63 ist.

An der Oberseite des Schenkels 67 ragt ein Dorn 69 mit einer Schrägfläche 70 nach oben. Mit dieser Schrägfläche 70 wirkt eine Gegenfläche 71 einer, beispielsweise durchsichtigen, Rahmenleiste 11 zusammen, die an der Oberseite der jeweiligen Seitenwand 5 bzw. 6 angebracht ist (vgl. Figuren 1 und 6). Wenn daher die Seitenwand 5 bzw. 6 aus der in Figur 6 links (und in Fig. 7 mit ihrem unteren Abschnitt vergrössert) dargestellten Lage zunächst mit ihrem Einhängteil 58 in den Gelenkzapfen 17c eingesetzt und anschliessend in die vertikale Schliesslage verschwenkt wird (wie sie an Hand der Seitenwand 6 rechts in Figur 6 dargestellt ist) so gleitet die schräge Gegenfläche 71 der Schrägfläche 70 des Dorns 69 entlang und drückt dabei gegen den Rastkörper 59 mit zwei Kraftkomponenten: Die eine, horizontale Kraftkomponente übt ein Drehmoment auf den Körper 59 im Gegensinne des Uhrzeigers aus, welches aber von der Rückwand 9 aufgenommen wird. Eine vertikale Kraftkomponente drückt auf die Lenker 68, die sich unter der Wirkung dieser Kraftkomponente nach unten auslenken, bis die Gegenfläche 71 über die Schrägfläche 70 geglitten ist und die aus Figur 9 ersichtliche Schliesslage der Rasteinrichtung 125 erreicht hat.

Während dieses Einrasten des Dorns 69 in eine hinter der schrägen Gegenfläche 71 gelegene Nut 72 wegen der geringeren Federkraft der Lenker 68 relativ leicht zu bewerkstelligen ist, erfolgt ein Öffnen dieser Verrastung schwergängiger. Wenn nämlich die Seitenwand 6 aus der in Figur 6 gezeigten Lage im Uhrzeigersinn um das Gabelgelenk 17c, 58 geschwenkt werden soll, so drückt die linke, vertikale Begrenzungsfläche der Nut 72 gegen den Dorn 69. In horizontaler Richtung gesehen, befindet sich aber dieser Dorn 69 rechts von einer durch das Zentrum des Lagerauges 62 verlaufenden Ebene Z in einem relativ geringen Abstand (verglichen mit dem Abstand zum Trägerabschnitt nach links). Das zu überwindende Drehmoment wird also relativ hoch sein, wozu die grössere Federkraft der Feder 63 noch beiträgt. Wenn aber dieses Drehmoment ausreicht, wird der Rastkörper entgegen der Kraft der Feder 63 im Uhrzeigersinne um das Lagerauge 62 so lange verschwenkt, bis der durch den Schenkel 67 gerade geführte Dorn 69 aus der Nut 72 herausgezogen und die Seitenwand 5 bzw. 6 freigegeben wird. Eine Anschlagfläche 65 des Rastkörpers 59 oberhalb des Lagerauges 62 stützt sich auf eine obere Kante der Rückwand 9 ab und vermindert damit ein Überschwingen der Feder 63 nach erfolgter Freigabe der Seitenwand. Natürlich könnte an Stelle der Feder 63 auch jede andere Belastungseinrichtung verwendet werden; beispielsweise könnte ein magnetischer Anschlag vorgesehen sein. Die Möglichkeit der kostengünstigen Fertigung der Feder 63 in einem Teil mit der übrigen Rasteinrichtung 59, insbesondere im Spritzguss, ist aber natürlich vorzuziehen.

Der Vorteil dieser Anordnung ist neben den unterschiedlichen Rastkräften beim Öffnen und beim Schliessen die Tatsache, dass die Seitenwand 6 bei ihrer Schiebebewegung mittels der Führungsvorrichtung 17 dabei durch den Eingriff von Dorn 69 und Nut 72 auch noch tadellos geführt ist. Es versteht sich, dass die obigen, im Hinblick auf den in Figur 6 rechts dargestellten Rastkörper 59 gebrauchten Ausdrücke, wie "rechts", "links", "oben" und "unten" relativ zu verstehen sind, denn schon bei dem in Figur 6 links gezeigten Rastkörper 59 vertauschen sich die Begriffe "rechts" und "links". Ebenso könnten sich bei anderer Anordnung auch die Begriffe von "oben" und "unten" vertauschen. Ferner ist klar, dass der Rastkörper 59 auch aus mehreren Teilen zusammengefügt sein könnte, obwohl natürlich die Ausführung als einteiliger Spritzkörper eine günstige Herstellung sichert. Auch könnte die Geradführung durch Vorsehen zweier Lenker 68 mit dem Schenkel 67 weggelassen und mit einem einzigen Lenker das Auslangen gefunden werden, in welchem Falle allerdings der Dorn 69 in horizontaler Richtung mehr Raum in der Nut 72 benötigen würde und dann seine Qualitäten als Schiebeführung beeinträchtigt wären. Auch liesse sich der Dorn 69 an sich an einer beliebigen Stelle des Lenkers 68 bzw. des Schenkels 67 anbringen. An Stelle eines Dorns 69 wäre es selbstverständlich auch möglich, eine über eine Schrägfläche erreichbare Rastvertiefung vorzusehen und so das Verhältnis der Teile 69 und 72 gegeneinander umzukehren.

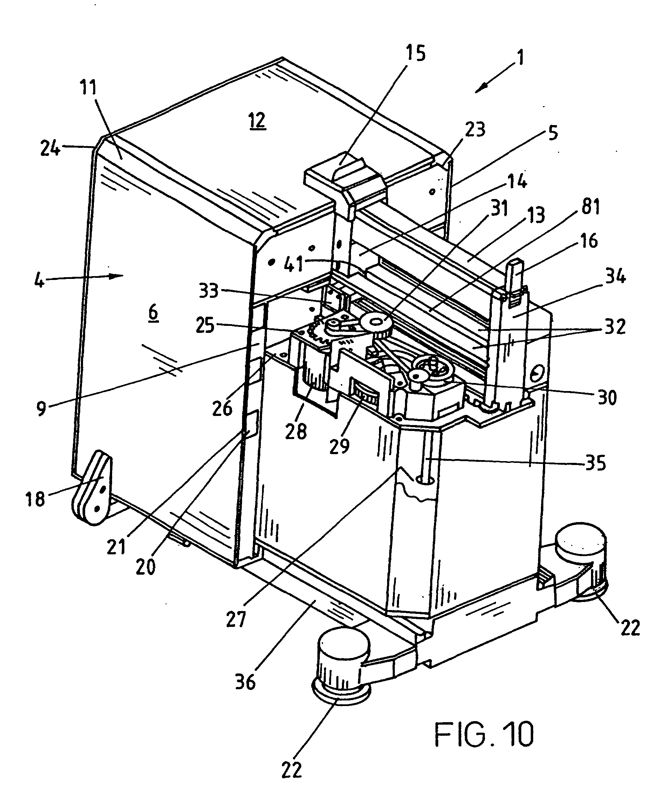

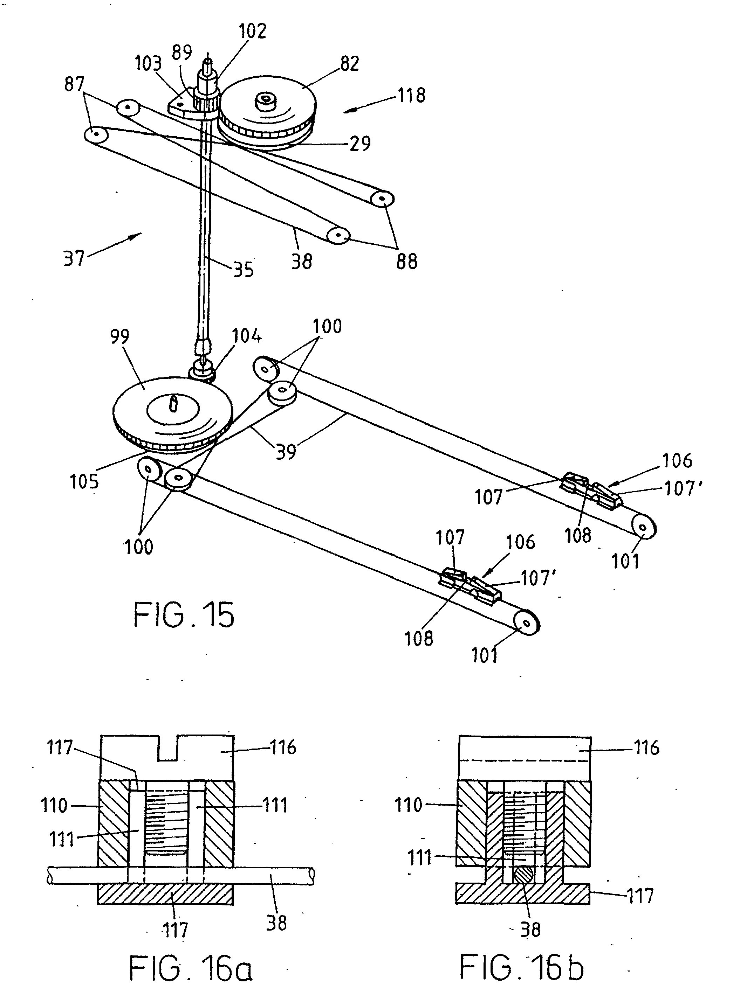

Die Figur 10 zeigt die Waage 1 aus der Blickrichtung des Pfeils II der Figur 1, jedoch nach teilweiser Wegnahme des Gehäuses 3 und bei geschlossenem Wägeraum 4. Die Seitenwände 5, 6 sowie die Abdeckwand 12 sind einzeln oder auch gemeinsam von Hand oder auch motorisch, vorzugsweise mit Hilfe eines einzigen Motors 28 verschiebbar, so dass der Wägeraum 4 an einer beliebigen Stelle geöffnet oder verschlossen werden kann. Insbesondere ist in Figur 10 der Antrieb für das Verschieben der Wände 5, 6, 12 gezeigt, welcher sich auf die drei Ebenen 25, 26, 27 und eine weitere Ebene 36 erstreckt. In diesem Beispiel handelt es sich um einen Seilantrieb (näher beschrieben in Figur 15), wobei ein hier nicht sichtbarer oberer Seilzug auf der Ebene 26 der Betätigung der Abdeckwand 12 und ein ebenfalls hier nicht sichtbarer unterer Seilzug auf der Ebene 36 der Betätigung der Seitenwände 5, 6 dient.

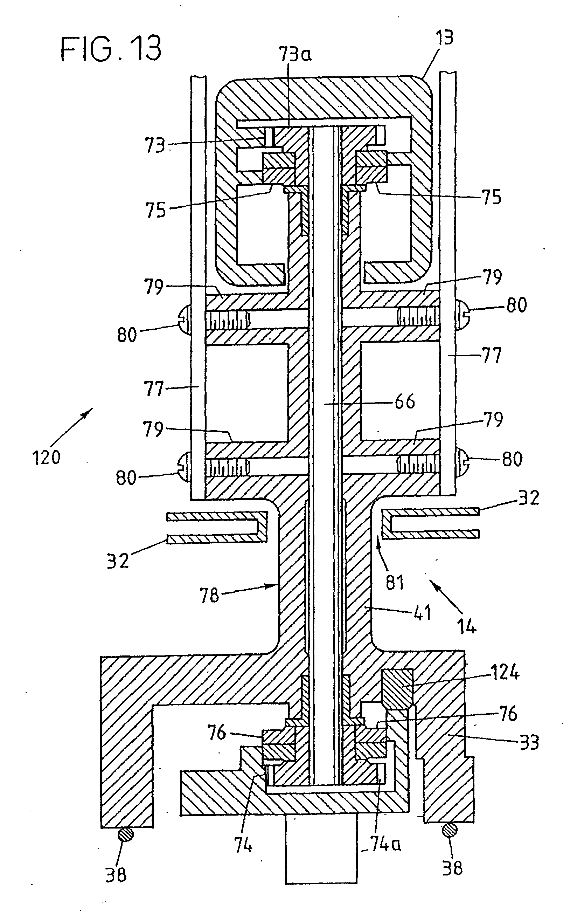

Weiterhin ist in Figur 10 der Führungsmechanismus der Abdeckwand 12 gezeigt. Der Griff 13 dient gleichzeitig als Schiene für das Führungselement 14 für die Halterung 15 der Abdeckwand 12, die entlang dem Griff 13 geführt wird. Der Griff 13 ist über eine Leiste 34 mit der Ebene 26 verbunden. Zwischen der Leiste 34 und der Rückseite der Rückwand 9 sind zwei Halteleisten 32 für das in Figur 10 entfernte Gehäuse 3 angeordnet. Unterhalb dieser Halteleisten 32 ist ein unterer Bereich 33 des Führungselements 14 vorgesehen, welches über einen schmalen Steg 41 mit der Halterung 15 für die Abdeckwand 12 verbunden ist. (Den konstruktiven Zusammenhang zeigt die Figur 13)

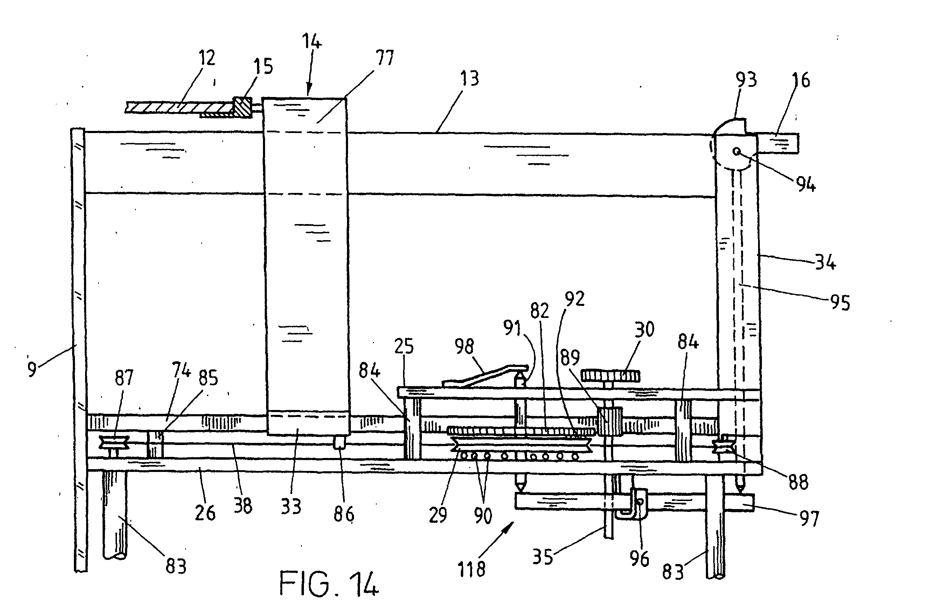

Mit dem Bezugszeichen 16 ist der Hebel zur Betätigung der Kupplung für die Abdeckwand 12 bezeichnet. Damit ist es möglich die antriebsmässige Verbindung der Abdeckwand 12 von dem oberen Seilzug 38 (siehe Figur 14) zu trennen oder wieder herzustellen.

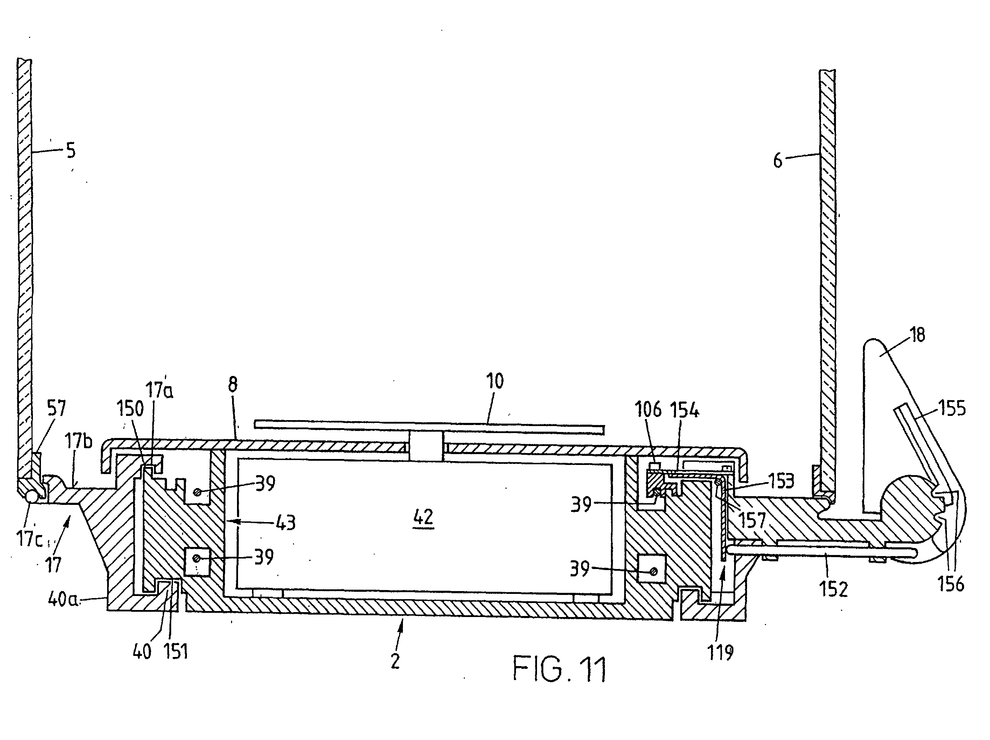

Figur 11 zeigt einen Schnitt durch den Bodenraum 2 der Waage 1. Mit dem Bezugszeichen 42 ist die hier nicht näher dargestellte eigentliche Wägetechnik bezeichnet Mit der Wägetechnik 42 ist die Waagschale 10 in bekannter Weise verbunden. Wie bereits oben erwähnt, kann sich die Wägetechnik in einer anderen Ausgestaltung der Waage auch innerhalb des Gehäuses 3 befinden und die Waagschale mittels eines L-förmigen Trägers daran gekoppelt sein.

Rechts und links der Wägetechnik 42 ist jeweils ein Führungselement 43, welches sich über die gesamte Länge der Waage 1 erstreckt, fest mit dem Bodenraum 2 verbunden. An seiner äusseren oberen Kante weist das Führungselement 43 einen rechteckförmigen Vorsprung 150 auf, welcher in die Führungsnut 17a der Führungsvorrichtung 17 eingreift (In der Figur 11 ist dies für die linke Führungsvorrichtung gezeigt).

Eine weitere Führungsvertiefung 151, die jedoch nur über einen Teil der Länge des Führungselements 43 reicht, ist unten im Führungselement 43 angeordnet. In sie greift ein Führungsbolzen 40 ein, der über eine Bolzenhalterung 40a mit der Führungsvorrichtung 17 fest verbunden ist. Die Position des Führungsbolzens 40 und die der Führungsvertiefung 151 wie auch deren Länge sind so aufeinander abgestimmt, dass sich jeweils ein Anschlag für die entsprechende Seitenwand in ihrer Geschlossenposition und in ihrer vollständigen Offenposition bildet. In weiteren Vertiefungen und Hohlräumen des Führungselements 43 ist das Seil des unteren Seilzugs 39 für die Verschiebung der Seitenwände 5, 6 geführt.

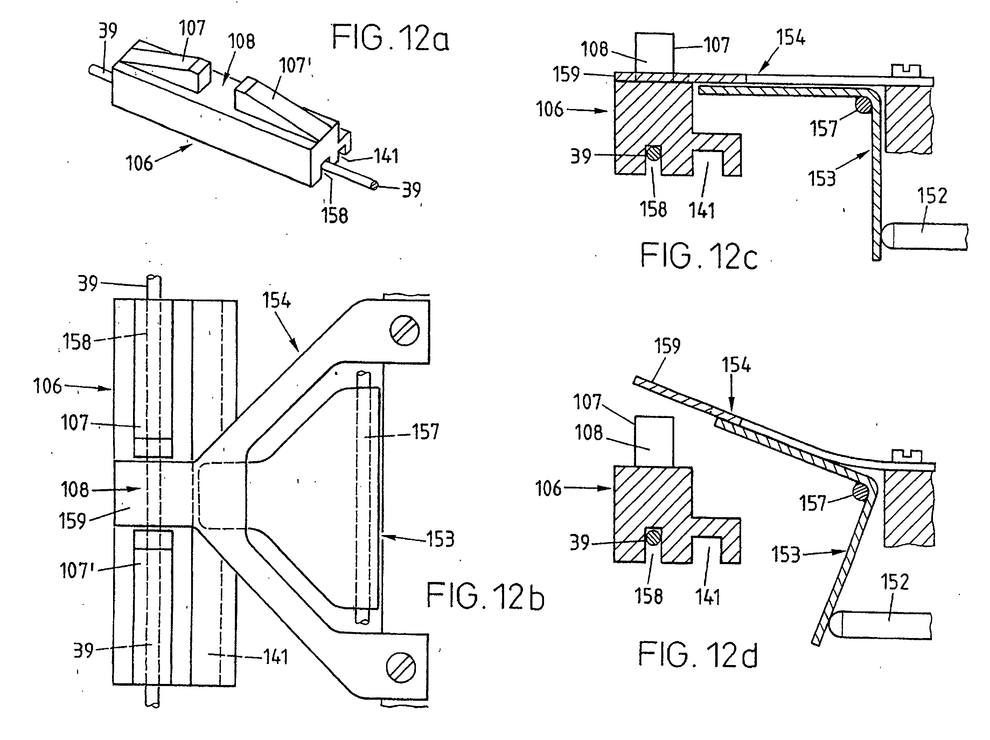

Die Führungsvorrichtungen 17 der Seitenwände 5, 6 können über einrastbare Seitenwandkupplungen 119 (Fig. 11 rechts und siehe auch Fig. 12) mittels der Kupplungsbetätigungen 18 von dem Seilzug 39 jeweils gelöst oder mit ihm verbunden werden. Der Hebel 18 besitzt zwei Rastpositionen 156 für ein Federelement 155. In der senkrechten Position des Hebels 18 ist die Seitenwand eingekuppelt. In der Schräglage des Hebels 18 rastet das Federelement 155 in die untere Rastposition 156 ein und drückt dabei die Stange 152 auf die winkelförmige Trägerfeder 153, die dabei um die Lagerachse 157 kippt und die Rastfeder 154 aus dem Mitnehmer 106 heraus anhebt. Dies ist im Detail in den Figuren 12a bis 12d gezeigt, wobei die Figur 12a den Mitnehmer 106 perspektivisch darstellt, die Figur 12b den Mitnehmer 106 mit der winkelförmigen Trägerfeder 153 und der Rastfeder 154 in Draufsicht sowie die Figuren 12c und 12d eine Seitenansicht, in der eingekoppelten Position (12c) und in der ausgekoppelten Position (12d) zeigen.

Der Mitnehmer 106 ist mit dem Seilzug 39, der längs dem Mitnehmer 106 in einem Spalt 158 geführt ist, fest verbunden und weist in seiner Längsrichtung von aussen nach innen Rampen 107 und 107' auf. Befindet sich die Kupplungsbetätigung 18 in Einkuppelstellung und der dazu gehörige Mitnehmer 106 an einer anderen Stelle des Transportweges, findet der Mitnehmer 106 während der Bewegung des Seilzugs 39 die Rastfeder 154 automatisch, indem die Lasche 159 der Rastfeder 154 bei der Bewegung, in welcher Richtung auch immer über die Rampen 107 bzw. 107' geführt in die Kerbe 108 einrastet. Dann wird die dazu gehörige Seitenwand 5, 6 automatisch in die gewünschte Stellung bewegt. Im entkuppelten Zustand können die Seitenwände 5, 6 auch von Hand bewegt werden. Zur Führung an der Führungsvorrichtung 17 besitzt der Mitnehmer 106 eine Fuge 141.

In der Schnittzeichnung der Figur 13 ist die Führungsvorrichtung 120 der in Figur 13 nicht dargestellten Abdeckwand 12 beschrieben. An einem Grundkörper 78 des Führungselements 14 sind Stege 79 angebracht, an denen in der Zeichnung die unterbrochen dargestellten Platten 77 mittels Schrauben 80 befestigt sind, die wiederum im oberen Bereich mit der nicht dargestellten Halterung 15 für die Abdeckwand 12 verbunden sind. Im oberen Bereich wird der Grundkörper 78 von dem Griff 13 umgeben. Im Inneren des Griffes 13 ist linksseitig der Mittellinie eine obere Zahnstangen 73 vorgesehen, entlang der ein oberes Zahnrad 73a geführt wird. Eine ähnliche Konstruktion ist im unteren Bereich 33 des Führungselements 14 vorgesehen mit der unteren Zahnstange 74 und dem unteren Zahnrad 74a. Die Zahnräder 73a und 74a sind über eine senkrecht angeordnete Welle 66 verbunden. Um ein seitliches Spiel zu vermeiden, sind sowohl oben als auch unten Führungsrollen 75 bzw. 76, bestehend aus jeweils einem Doppelrollensystem, angeordnet, so dass das Führungselement 14 stets gerade und verkantungsfrei entlang dem Griff 13 fahrbar ist. Die vertikale Kraft wird über ein Gleitelement 124 abgestützt. Dies kann aber auch über eine oder mehrere Rollen geschehen. Der untere Bereich 33 des Führungselements 14 ist an seiner Unterseite mittels einer anhand Figur 16 näher beschriebenen Vorrichtung mit dem oberen Seilzug 38 verbunden. Über den Seilzug 38 wird über den Antrieb der Grundkörper 78 entlang der Zahnstangen 73 und 74 bewegt. Mit dem Bezugszeichen 32 sind die Halteleisten für das Gehäuse 3 bezeichnet. Die Halteleisten 32 bilden einen Schlitz 81, in dem sich der Steg 41 des Grundkörpers 78 bewegt (siehe auch Figur 10). Der Schlitz 81 kann zusätzlich mit Klapplamellen, Dichtungslippen oder Bürsten gegen das Eindringen von Staub etc. ins Innere des Gehäuses 3 abgedichtet sein.

Die Figur 14 zeigt eine Seitenansicht des Antriebes für die Abdeckwand 12, gemäss den Figuren 10 und 13. Der Antriebsbereich weist die Ebenen 25 und 26 entsprechend der Figur 10 auf, allerdings ohne Darstellung des Motors 28. Am hinteren Ende des Griffes 13 befindet sich der Kupplungshebel 16, der eine im Bereich von Getrieberädern 29, 82 befindliche Kupplung 118 (nicht im Detail gezeigt) steuert, um wahlweise die Abdeckwand 12 vom Motor 28 an- bzw. von ihm abzukuppeln. Der Motor 28 kann entweder ein drehrichtungsumkehrbarer Motor sein oder es ist ein Getriebe für die Änderung der Drehrichtung vorgesehen. In letzterem Falle kann dieses Getriebe entweder von Hand aus umschaltbar sein oder von endschalterähnlichen Betätigungsgliedern, die jeweils beim Erreichen einer zu definierenden Endstellung eine Umschaltung vornimmt. Mit 30 ist ein Zahnriemenrad bezeichnet, welches seinen Antrieb vom Motor 28 erhält und auf die Getrieberäder 89 und 82 überträgt.

Es ist ersichtlich, wie die Ebene 26 auf langen Säulen 83 und die Ebene 25 ihrerseits auf der Ebene 26 befestigten kurzen Säulen 84 ruht. Auch die untere schematisch dargestellte Zahnstange 74 kann auf der Ebene 26 über Säulen 85 (nur eine ist zu sehen) abgestützt sein. Im übrigen aber bilden die untere Zahnstange 74, die im Griff 13 enthaltene obere Zahnstange 73 (siehe Figur 13) und die Leiste 34 mit der Rückwand 9 eine Art steifer Rahmen, der die Abdeckwand 12 verkantungsfrei führt. Die Abdeckwand 12 ist über die Halterung 15 für die Abdeckwand 12 verbunden, die wiederum über die Platten 77 des Führungselements 14 an dem nicht sichtbaren Grundkörper 78 befestigt sind, wie es bei der Figur 10 beschrieben wurde. Der untere Bereich 33 des Führungselements 14 wird entlang der unteren Zahnstange 74 geführt, an dessen Unterseite ein stiftartiges Verbindungselement 86 vorragt. An diesem Verbindungselement 86 ist ein oberer Seilzug 38 befestigt, der um die als Seilrollen ausgebildeten Getrieberäder 29, 87 und 88 geführt ist, d.h. er ist um das als Antriebsscheibe dienende Seilrad 29 in bekannter Weise herumgeführt. Das Seilrad 29 kann beispielsweise auf Kugeln 90 gelagert sein.

Aus Figur 10 ist das vom Motor 28 über einen Zahnriemen angetriebene Zahnriemenrad 30 ersichtlich, das gemäss Figur 14 mit dem Getrieberad 89 über die Welle 35 verbunden ist. Die Welle 35 ist so ausgebildet, dass sie für Montage und Demontage auf einfache Weise von oben eingesetzt werden kann. Das Zahnrad 89 greift in ein in vertikaler Richtung höhenverstellbares, bereits an Hand der Figur 10 erwähntes Getrieberad 82, welches an einer Welle 91 befestigt ist. Das Getrieberad 82 dient dazu, je nach seiner Höhenlage mit dem Seilrad 29 zu kuppeln oder von ihm abgekuppelt zu sein. Die Kupplung kann in an sich bekannter Weise und beliebig ausgebildet werden, wird jedoch vorzugsweise über eine als Kupplungseinrichtung dienende Rampenkonstruktion 92 mit einer Rastfeder, ähnlich der im Zusammenhang mit der Figur 12 beschriebenen erfolgen. Da sich diese im Raum zwischen dem Seilrad 29 und dem Getrieberad 89 befindet, dienen, aus Gründen der Platzeinsparung, als Einrastelement für die Kupplungsfeder zwei mit einer oberen Schrägfläche versehene Bolzen.

Um nun wahlweise das Seilrad 29 vom motorischen Antrieb 28 und 82 zu lösen und so die Abdeckwand 12 von Hand aus verschieben zu können oder bei einer Verschiebung etwa der Seitenwände 5, 6 die Abdeckwand 12 nicht zwangsweise mitzuverschieben, ist der schon an Hand der Figur 10 erwähnte Kupplungshebel 16 zur Bedienung der Abdeckwandkupplung 118 vorgesehen. Der Kupplungshebel 16 ist mit einer Exzenternocke 93 verbunden, die mit dem Hebel 16 um eine Hebelachse 94 an der Leiste 34 schwenkbar ist. In der Leiste 34 ist ein Stössel 95 auf- und ab verschiebbar geführt. Dieser Stössel 95 liegt unter dem Druck eines um eine Achse 96 verschwenkbaren zweiarmigen Kipphebels 97 an der Exzenternocke 93 an.

Das andere Ende des Kipphebels 97 lagert die Welle 91, an der das Getrieberad 82 befestigt ist. An der Oberseite dieser Welle 91 liegt eine an der Ebene 25 befestigte Feder 98 an. Somit drückt die Feder 98 die Welle 91 nach unten auf den Kipphebel 97. Der wiederum erfährt dadurch ein Drehmoment im Gegensinne des Uhrzeigers um die Achse 96 und drückt somit auf den Stössel 95. Wird daher der Kupplungshebel 16 im Gegensinne des Uhrzeigers verschwenkt, so drückt die Exzenternocke 93 den Stössel 95 entgegen dem Druck der Feder 98 nach unten. Dabei schwenkt der zweiarmige Kipphebel 97 leicht im Uhrzeigersinn und hebt damit an seinem anderen Ende die Welle 91 samt dem Zahnrad 82 hoch, womit die Kupplung zwischen diesem Zahnrad 82 und dem Seilrad 29 gelöst wird. Das Zahnrad 82 bleibt bei dieser Bewegung natürlich weiterhin im Eingriff mit dem Zahnrad 89 zum Antrieb des oberen Seilzuges 38. Die hier beschriebene Betätigung der Kupplungseinrichtung von Hand kann selbstverständlich auch automatisch erfolgen, beispielsweise mittels eines elektromagnetischen Stellglieds.

Die Figur 15 zeigt den Antrieb in Gestalt von einem oberen Seilzug 38 und einem unteren Seilzug 39 ohne Motor 28 und Getrieberad 30, gemäss Figur 10. Das Zahnrad 89 ist mit seinen Lagern 102 und 103 mit der-Antriebswelle 35 verbunden, die den Antrieb an den unteren Seilzug 39 überträgt. Das Seil des oberen Seilzuges 38 wird in einem geschlossenen Kreis von dem Seilrad 29, welches von dem Seil omegaförmig umgeben ist über die Seilrollen 87 und 88 wie gezeigt zu dem Seilrad 29 zurückgeführt. Die geraden Längsseiten zwischen den Rollen 87 und 88 sind an passender Stelle durch das Seilbefestigungselement 86 mit dem unteren Bereich 33 des Führungselements 14 der Verschiebeeinrichtung der Abdeckwand (siehe Figur 14) fest verbunden. Eine bevorzugte Ausführung des Seilbefestigungselements 86 ist in Figur 16, die weiter unten beschrieben wird, gezeigt.

Am unteren Ende der Welle 35 treibt ein Zahnrad 104 den unteren Seilzug 39 über das Zahnrad 99, welches fest mit dem Seilrad 105 verbunden ist, an. Der Seilzug 39 wird wie der obere Seilzug 38 in einem geschlossenen Kreis von dem Seilrad 105, welches von dem Seil omegaförmig umgeben ist, über die Seilrollen 100 und 101 wie gezeigt zu dem Seilrad 105 zurückgeführt. An den oberen Längsseiten des Seilzugs 39 zwischen den Seilrollen 100 und 101 sind die Mitnehmer 106 zum Transport der Seitenwände 5, 6 befestigt (siehe auch Fig. 12a - 12d).

Wie oben erwähnt zeigt die Figur 16 eine mögliche Seilbefestigung von der Seite (Figur 16a) und von vorne (Figur 16b). Die Seilbefestigung besteht aus einem Körper 117, in dem sich im unteren Bereich ein Schlitz 111 zur Aufnahme des Seiles 38 befindet. In seinem oberen Bereich besitzt der Körper 117 ein Innengewinde. Auf den Körper 117 wird eine Hülse 110 aufgesteckt und eine Schraube so weit aufgedreht dass das Seil am Umfang der Hülse 110 zweimal verklemmt wird.

Wie bereits oben erwähnt, sind die Seitenwände 5, 6 und die Abdeckwand 12 mittels eines einzigen Motors 28 verschiebbar. Es ist nun eine Ausgestaltung der bewegbaren Wände 5, 6, 12 denkbar, in der diese unterschiedliche Verschiebungswege zum Öffnen und Schliessen des Wägeraums 4 aufweisen, beispielsweise eines kürzeren oder längeren Weges der Abdeckwand 12 gegenüber dem Verschiebeweg der beiden Seitenwände 5, 6. Die Ausgestaltung der Antriebsmittel als Seilzüge 38, 39 sowie deren Verbindung mit dem Motor 28 über mehrere Getrieberäder gestattet in einfacher Weise deren Ausgestaltung als Übersetzung zur synchronen Bewegung der jeweiligen Wände 5, 6, 12 im eingekuppelten Zustand.

Weiterhin kann es von Vorteil sein, wenn die Bewegungsrichtung der Seitenwände 5, 6 und der Abdeckwand 12 durch manuellen Druck auf irgendeine geeignete Stelle an der Seitenwand 5, 6 oder der Abdeckwand 12 in Richtung der gewünschten Bewegung erkannt und in Gang gesetzt wird. Werden beispielsweise die Kupplungsbetätigungen 18, 16 in eingekuppeltem Zustand bewegt, kann über einen Drehgeber die Bewegungsrichtung detektiert und der Motor 28 in der richtigen Richtung aktiviert werden. Ferner ist es denkbar, ähnlich wie bei dem Einschub von CD-ROM Scheiben in CD-Laufwerken, nach Überschreiten einer bestimmten Krafteinwirkung die Wände 5, 6, 12 in Bewegung zu setzen.

Wie schon in der Figur 1 gezeigt wird, überragt die Rückwand 9 des Wägeraumes 4 sowohl in ihrer Breite als auch in der Höhe das Gehäuse 3. Dadurch bietet sich die Möglichkeit von Aussparungen 20 in der Rückwand 9 (siehe Figur 1), die sowohl seitlich aber auch oben angeordnet sein können. Diese Aussparungen 20 sind mit auswechselbaren Clips 21 zum Verschliessen der Aussparungen 20 versehen. Beispielsweise können ein oder mehrere Clips 21 aus einer oder mehreren Aussparungen 20 entfernt werden, um irgendwelche Versorgungen, beispielsweise elektrische Zuleitungen und/oder Schläuche für zu wägende Flüssigkeitszugaben, hindurchzuführen. Damit können innerhalb des Wägeraumes Experimente unter Beobachtung der Gewichtsveränderung durchgeführt werden, ohne zusätzliches Öffnen des Wägeraumes 4, was Fehlmessungen verursachen könnte. Selbstverständlich sind solche Aussparungen 20 auch an den Seitenwänden 5 oder 6, der Vorderwand 7 und/oder der Abdeckwand 12 denkbar.

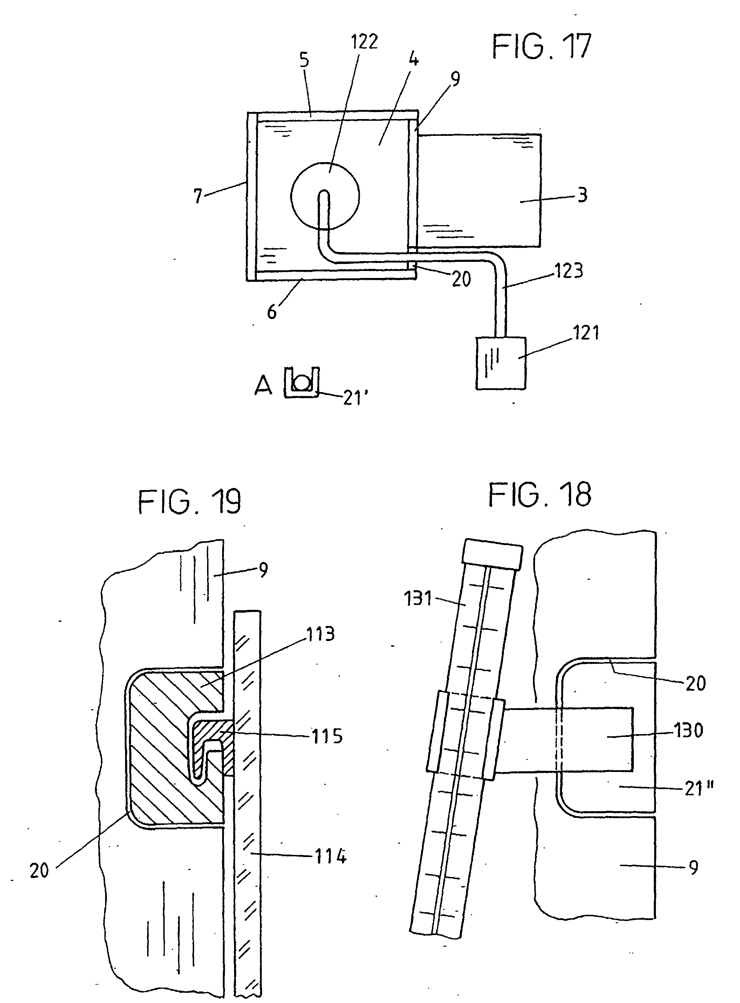

Eine mögliche Verwendung der Aussparungen 20 in der Rückwand 9 zeigt die Figur 17 in einer Ansicht von oben. Die in der Regel mittels der Clips 21 gegen Zugluft verschlossenen Aussparungen 20, können durch Entfernen der Clips 21 als Durchführungen für Leitungen, Schläuche etc. dienen. In Figur 17 wird beispielsweise eine Flüssigkeit von dem Behälter 121 über die Leitung 123 durch die Aussparung 20 in das Gefäss 122 zum Wägen geleitet. In vorteilhafter Weise kann anstelle der offenen Aussparung 20 in diese ein spezieller U-förmiger Clip 21' (siehe Einzelheit A) eingefügt werden, um der jeweiligen Zuleitung einen besseren Halt zu geben.

Eine andere, weiterführende Anwendung der Clips 21" ist es, diese mit Halterungen 130 zu versehen, die in das Innere des Wägeraums 4 ragen, wie Figur 18 beispielhaft zeigt. An diesen Halterungen 130 können Leitungen, Schläuche, Thermometer 131 und/oder jegliche Art von Werkzeug, die für ein Experimentieren innerhalb des Wägeraums 4 notwendig sind, vorzugsweise abnehmbar, befestigt werden.

Eine weitere Anwendung der Aussparungen ist in Figur 19 gezeigt. Es sind nämlich Anwendungen der Waage mit Scheiben 114 der Seitenwände unterschiedlicher Höhe denkbar. Um diese Scheiben 114 ebenfalls mittels des erfindungsgemässen Antriebs betätigen zu können, bedarf es einer Führung im oberen Bereich der Scheibe 114. Hierzu dienen die Aussparungen 20 in der Rückwand 9, in die geeignete Clips 113 eingesetzt werden. An den Scheiben 114 sind Halter 115 befestigt, die gleitend in die Clips 113 eingreifen. Selbstverständlich können bei dieser Ausführungsform die Scheiben 114 ebenso einfach von der Waage entnommen werden, wie oben bei den Seitenwänden 5, 6 beschrieben.

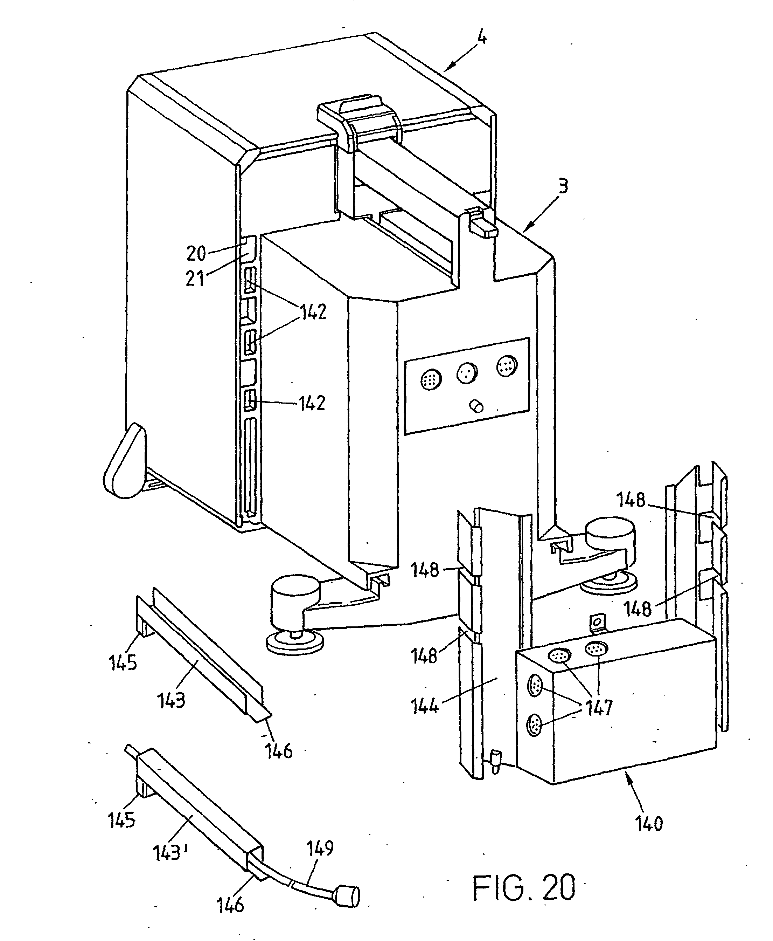

An das hintere Ende der Waage kann durch ein einfaches Befestigungsmittel, beispielsweise eine gerändelte Schraube, eine Zusatzeinheit 140 lösbar angebracht werden, wie Figur 20 zeigt. In dieser Zusatzeinheit 140 können Versorgungseinheiten, beispielsweise eine elektrische Batterie, oder auch eine Steuerungselektronik untergebracht sein. Die Zusatzeinheit 140 verfügt über Öffnungen 147 als Durchführungen für verschiedene Arten von Zufuhrleitungen. Damit lassen sich Experimentiereinrichtungen, die im Wägeraum 4 installiert sind, wie beispielsweise Dosiereinrichtungen etc., elektrisch versorgen, wobei die Zufuhrleitungen durch die mit speziellen Clips (vergleichbar mit den Clips 21') verschlossenen Aussparungen 20 ins Innere des Wägeraums 4 geführt sind. Damit jedoch die elektrischen Zufuhrleitungen und/oder etwaige Leitungen 123 für Flüssigkeiten (wie anhand der Figur 17 beschrieben) die sich beim Öffnen über das Gehäuse 3 schiebenden Seitenwände 5, 6 nicht beeinträchtigen oder gar blockieren, ist die Rückwand 9 hinten mit Vertiefungen 142 versehen, in die auf beiden Seiten des Gehäuses 3 jeweils Führungsrinnen 143 eingehängt werden können. Diese Führungsrinnen 143 sind in entsprechende Ausnehmungen 148 einer Haltevorrichtung 144 an der Einheit 140 eingehängt. Die Führungsrinnen 143 können beispielsweise aus Metall oder auch aus einem Polymermaterial gefertigt sein. Wie die Figur 20 zeigt, können die Führungsrinnen in verschiedener Weise ausgestaltet sein; beispielsweise ist die Führungsrinne 143' mit einer Abdeckung versehen und bildet somit eine Art Röhre. Auch sind die Führungsrinnen als seitliche Träger, die über eine oder mehrere der Aussparungen 20 hinwegreichend auf das Gehäuse 3 aufsteckbar ausgestaltet sind, denkbar. Weiterhin ist es denkbar in den Führungsrinnen eine einfache Elektronik oder einen Teil einer selben unterzubringen, insbesondere dann, wenn auf eine Zusatzeinheit 140 verzichtet wird.

In ihrer Breite sind die Führungsrinnen 143 begrenzt, wobei zwei mal die Breite einer Führungsrinne 143 addiert zur Breite des Gehäuses 3 kleiner sein sollte, als die Breite der Rückwand 9 damit die Bewegung der Seitenwände 5, 6 nicht behindert wird. An ihrem jeweiligen Ende besitzt eine Führungsrinne eine Einhängevorrichtung 145, 146, um an der Rückwand bzw. an der Haltevorrichtung 144 befestigt zu werden. Damit wird erreicht, dass der Wägeraum 4 nach aussen allseits geschlossen gehalten werden kann und dennoch von aussen her etwaige Experimentiereinrichtungen, wie sie im Detail in der parallelen Anmeldung CH-1957/00 beschrieben sind, im Inneren des Wägeraums 4 versorgt und bedient werden können.

Es versteht sich von selbst, dass das Gehäuse 3, das im wesentlichen die Antriebsmechanik enthält, und die Einheit 140 sich zu einem gemeinsamen Gehäuse ergänzen können. Die Führungsrinnen 143 für Zuleitungen jeglicher Art lassen sich in die Seitenwände dieses gemeinsamen Gehäuses integrieren und gegebenenfalls auch mit speziell dafür vorgesehenen Abdeckungen nach aussen verschliessen.

### Bezugszeichenliste

- 1: Waage
- 2: Bodenraum
- 3: Gehäuse
- 4: Wägeraum
- 5: Seitenwand
- 6: Seitenwand
- 7: Vorderwand
- 8: Boden
- 9: Rückwand
- 10: Waagschale
- 11: Rahmenleiste
- 12: Abdeckwand
- 13: Griff
- 14: Führungselement
- 15: Halterung für Abdeckwand
- 16: Kupplungshebel
- 17: Führungsvorrichtung
- 17a: Führungsnut
- 17b: Stützfläche
- 17c: Gelenkzapfen
- 17d: Erhebung
- 18: Kupplungsbetätigung, Hebel
- 19, 19': Halterung für Vorderwand
- 20: Aussparungen
- 21,21',21": Clip
- 22: Füsse
- 23: Ecke
- 24: Ecke
- 25: Ebene
- 26: Ebene
- 27: Ebene
- 28: Motor
- 29: Seilrad, Getrieberad
- 30: Zahnriemenrad
- 32: Halteleiste für Gehäuse
- 33: Unterer Bereich
- 34: Leiste
- 35: Welle
- 36: Ebene
- 38: Oberer Seilzug
- 39: Unterer Seilzug
- 40: Führungsbolzen
- 40a: Bolzenhalterung
- 41: Steg
- 42: Wägetechnik
- 43: Führungselement
- 44: Rasthebel
- 45: Blattfeder
- 46: Rolle
- 47: Einsenkung
- 48: Stange
- 49: Nase
- 50: Gabelartige Ausnehmung
- 51, 51': Nut
- 52: Schiene
- 53: Lippen
- 54: Schräge
- 55: Klemmrolle
- 56: Stützfläche
- 57: Leiste
- 58: Einhängteil
- 59: Rastkörper
- 60: Trägerabschnitt
- 61: Zunge
- 62: Lagerauge
- 63: Feder
- 64: Abstützbolzen
- 65: Anschlagfläche
- 66: Welle
- 67: Schenkel
- 68: Lenker
- 69: Dorn
- 70: Schrägfläche
- 71: Gegenfläche
- 72: Nut
- 73: obere Zahnstange
- 73a: oberes Zahnrad
- 74: untere Zahnstange
- 74a: unteres Zahnrad
- 75: obere Führungsrollen
- 76: untere Führungsrollen
- 77: Platten
- 78: Grundkörper
- 79: Stege
- 80: Schrauben
- 81: Schlitz
- 82: Zahnrad, Getrieberad
- 83: Lange Säulen
- 84: Kurze Säulen
- 85: Säulen
- 86: Verbindungselement
- 87: Getrieberad, Seilrolle
- 88: Getrieberad, Seilrolle
- 89: Zahnrad, Getrieberad
- 90: Kugeln
- 91: Welle
- 92: Rampenkonstruktion
- 93: Exzenternocken
- 94: Hebelachse
- 95: Stössel
- 96: Achse
- 97: Kipphebel
- 98: Feder
- 99: Zahnrad
- 100: Seilrollen
- 101: Seilrollen
- 102: Lager
- 103: Lager
- 104: Zahnrad
- 105: Seilrad
- 106: Mitnehmer
- 107, 107': Rampe
- 108: Kerbe
- 110: Hülse
- 111: Schlitz
- 113: Clip
- 114: Scheibe der Seitenwand
- 115: Halter
- 116: Schraubenschlitz
- 117: Körper
- 118: Abdeckwandkupplung
- 119: Seitenwandkupplung
- 120: Führungsvorrichtung
- 121: Behälter
- 122: Gefäss
- 123: Leitung
- 124: Gleitelement
- 125: Rasteinrichtung
- 130: Halterungen an Clips
- 131: Thermometer
- 140: Zusatzeinheit
- 141: Fuge
- 142: Vertiefungen in Rückwand
- 143, 143': Führungsrinnen
- 144: Haltevorrichtung
- 145: Einhängevorrichtung vorne
- 146: Einhängevorrichtung hinten
- 147: Öffnungen an Zusatzeinheit
- 148: Ausnehmungen
- 150: Vorsprung
- 151: Führungsvertiefung
- 152: Stange
- 153: winkelförmiger Trägerfeder
- 154: Rastfeder
- 155: Federelement
- 156: Rastpositionen
- 157: Lagerachse
- 158: Spalt
- 159: Lasche
- 180: Blende
- 181: Spalt
- 182: Vertiefung
- 183: Kante

## Patentansprüche

1. Waage (1) mit einem Wägeraum (4), der teilweise von einem feststehenden Teil (8, 9) der Waage begrenzt ist sowie von mindestens einer Seitenwand (5, 6), einer Vorderwand (7) und einer Abdeckwand (12), wovon mindestens eine der Wände (5, 6, 12) zum Öffnen und Schliessen des Wägeraumes (4) mittels einer Führungsvorrichtung (17, 120) bewegbar ist, **dadurch gekennzeichnet, dass** in die Führungsvorrichtung (17, 120) eine Halterung (15, 17c, 58, 125) für die mindestens eine bewegbare Wand (5, 6, 12) und in den feststehenden Teil (8) je eine Halterung (19) für jede nicht bewegbare Wand (7) integriert ist, welche Halterungen (15, 19, 17c, 58, 125) die jeweilige Wand (5, 6, 7, 12) mittels eines durch eine einfache, auf die Wand (5, 6, 7, 12) und/oder die Halterung (15, 19, 17c, 58, 125) einwirkende Betätigung ver- und entriegelbaren Formschlusses halten beziehungsweise freigeben.

2. Waage (1) nach Anspruch 1, **dadurch gekennzeichnet, dass** eine als Vorderwand (7) ausgebildete, nicht bewegbare Wand sowie jede der als Seitenwände (5, 6) und/oder Abdeckwand (12) ausgebildeten bewegbaren Wände mit der jeweiligen Halterung (15, 19, 17c, 58, 125) einzeln durch einfache manuelle Betätigung verund entriegelbar ist.

3. Waage (1) nach.Anspruch 1 oder 2, **dadurch gekennzeichnet, dass** mindestens eine der Halterungen (17c, 58, 125) für die jeweils nicht bewegbare Wand (7) und/oder die jeweils bewegbare Wand (5, 6, 12) mindestens einen Rastkörper (59) aufweist.

4. Waage (1) nach Anspruch 3, **dadurch gekennzeichnet, dass** sie an dem als Rückwand (9) ausgebildeten, feststehenden Teil der Waage mindestens einen Rastkörper (59) zum Einrasten der als Seitenwand (5, 6) ausgebildeten mindestens einen bewegbaren Wand aufweist.

5. Waage (1) nach Anspruch 3 oder 4, **dadurch gekennzeichnet, dass** der Rastkörper (59) einen vertikalen Trägerabschnitt (60), eine sich weitgehend horizontal vom Trägerabschnitt (60) weg erstreckende Zunge (61) mit einem Lagerauge (62), um welches der Rastkörper (59) schwenkbar ist, eine sich an einem Abstützbolzen (64) abstützende Feder (63) sowie zwei federnde, parallele, durch einen Schenkel (67) miteinander verbundene Lenker (68) aufweist

6. Waage (1) nach einem der Ansprüche 3 bis 5, **dadurch gekennzeichnet, dass** der Rastkörper (59) als einteiliger Kunststoffkörper ausgebildet ist.

7. Waage (1) nach einem der Ansprüche 4 bis 6, **dadurch gekennzeichnet, dass** die Entriegelung der mindestens einen Seitenwand (5, 6) aus dem Rastkörper (59) manuell durch eine Schwenkbewegung nach aussen erfolgt.

8. Waage (1) nach einem der Ansprüche 4 bis 7, **dadurch gekennzeichnet, dass** die für das Herausziehen einer in den Rastkörper (59) eingerasteten Seitenwand (5, 6) benötigte Kraft grösser ist, als jene für das Einrasten der Seitenwand (5, 6).

9. Waage (1) nach einem der Ansprüche 1 bis 8, **dadurch gekennzeichnet, dass** an den Stellen des Aufeinandertreffens zweier Wände (5, 6, 7, 9, 12) eine Wand eine Vertiefung (182) aufweist, in welche die zweite Wand in der jeweiligen Geschlossenstellung beider Wände (5, 6, 7, 12) eingreift.

10. Waage (1) nach einem der Ansprüche 1 bis 8, **dadurch gekennzeichnet, dass** an den Stellen des Aufeinandertreffens zweier Wände (5, 6, 7, 9, 12) eine Wand eine winkelförmige Blende (180) aufweist, die in der jeweiligen Geschlossenstellung beider Wände (5, 6, 7, 12) die zweite Wand teilweise überdeckt.

11. Waage (1) nach einem der Ansprüche 1 bis 10, **dadurch gekennzeichnet, dass** für die Verschiebung der mindestens einen bewegbaren Wand (5, 6, 12) Antriebsmittel (38, 39) vorhanden sind.

12. Waage (1) nach Anspruch 11, **dadurch gekennzeichnet, dass** die Antriebsmittel als Seilzüge (38, 39) ausgebildet sind.

13. Waage (1) nach Anspruch 12, **dadurch gekennzeichnet, dass** ein erster Seilzug (38) im oberen Bereich und ein zweiter Seilzug (39) im unteren Bereich der Waage angeordnet ist und beide Seilzüge (38, 39) über eine gemeinsame Welle (35) verbunden sind.

14. Waage (1) nach einem der Ansprüche 11 bis 13, **dadurch gekennzeichnet, dass** Kupplungen (118, 119) vorhanden sind, die ein An- und Abkuppeln der mindestens einen bewegbaren Wand (5, 6, 12) an die Antriebsmittel (38, 39) ermöglichen.

15. Waage (1) nach Anspruch 14, **dadurch gekennzeichnet, dass** Hebel (16, 18) für eine manuelle Betätigung der Kupplungen (118, 119) vorhanden sind.

16. Waage (1) nach Anspruch 14 oder 15, **dadurch gekennzeichnet, dass** die Kupplungen (119) Mitnehmer (106) aufweisen und so ausgebildet sind, dass der Kupplungsvorgang selbstfindend erfolgt.

17. Waage (1) nach Anspruch 16, **dadurch gekennzeichnet, dass** die Mitnehmer (106) der Kupplungen (119) eine Kerbe (108) und beidseitig daran anschliessende, nach aussen abfallenden Rampen (107, 107') aufweisen, über welche eine Rastfeder (154) beim Bewegen der Wand (5, 6) gleitend in die Kerbe (108) einrastet.

18. Waage (1) nach einem der Ansprüche 11 bis 17, **dadurch gekennzeichnet, dass** die Seitenwände (5, 6) und die Abdeckwand (12) als bewegbare Wände ausgebildet sind und die Seitenwände (5, 6) gegenüber der Abdeckwand (12) unterschiedliche Schliess- bzw. Öffnungswege aufweisen und dass zum synchronen Bewegen die Antriebsmittel (38, 39) entsprechende Übersetzungen aufweisen.

19. Waage (1) nach einem der Ansprüche 11 bis 18, **dadurch gekennzeichnet, dass** die Antriebsmittel (38, 39) von einem einzigen Motor (28) angetrieben werden.

20. Waage (1) nach einem der Ansprüche 11 bis 19, **dadurch gekennzeichnet, dass** mehr als eine Wand bewegbar ist und die bewegbaren Wände (5, 6, 7) einzeln, gemeinsam oder in jeder denkbaren Kombination antreibbar sind.

21. Waage (1) nach Anspruch 14, **dadurch gekennzeichnet, dass** durch manuellen Druck auf irgendeine Stelle einer der eingekuppelten beweglichen Wände (5, 6, 12) in Richtung der gewünschten Verschiebung das Antriebsmittel für die Verschiebung dieser Wand in Gang gesetzt wird.

22. Waage (1) nach einem der Ansprüche 1 bis 21, **dadurch gekennzeichnet, dass** die Waage einen Griff (13) aufweist.

23. Waage (1) nach Anspruch 22, **dadurch gekennzeichnet, dass** der Griff (13) als Schiene für ein Führungselement (14) der Führungsvorrichtung (120) der Abdeckwand (12) ausgebildet ist.

24. Waage (1) nach Anspruch 23, **dadurch gekennzeichnet, dass** das Führungselement (14) einen senkrechten Grundkörper (78) aufweist, wobei im oberen und unteren Bereich der Führungsvorrichtung (120) jeweils mindestens eine Zahnstange (73, 74) vorgesehen ist, welche mit jeweils mindestens einem an einer senkrechten Welle (66) angeordneten Zahnrad (73a, 74a) des Führungselements (14) im Eingriff ist.

25. Waage (1) nach Anspruch 23 oder 24, **dadurch gekennzeichnet, dass** das Führungselement (14) seitlich gleitend oder mittels Führungsrollen (75, 76) in der Führungsvorrichtung (120) geführt ist.

26. Waage (1) nach einem der Ansprüche 1 bis 25, **dadurch gekennzeichnet, dass** in der mindestens einen Seitenwand (5, 6), der Vorderwand (7), der Abdeckwand (12) und/oder im feststehenden Teil der Waage (9) Aussparungen (20) zur Durchführung von Zuleitungen (123) vorgesehen sind.

27. Waage (1) nach Anspruch 26, **dadurch gekennzeichnet, dass** die Aussparungen (20) mittels Clips (21, 21', 21", 113) verschliessbar sind.

28. Waage (1) nach Anspruch 27, **dadurch gekennzeichnet, dass** die Aussparungen (20) mit Clips (21") versehen sind, die Halterungen (130) zum Befestigen von Werkzeug aufweisen.

29. Waage (1) nach Anspruch 27, **dadurch gekennzeichnet, dass** die Aussparungen (20) mit Clips (113) versehen sind, die in Zusammenwirkung mit Haltern (115) als Teil der Führungsvorrichtung für bewegbare Wände (114) unterschiedlicher Höhe vorgesehen sind.

30. Waage (1) nach einem der Ansprüche 1 bis 29, **dadurch gekennzeichnet, dass** die Waage eine Zusatzeinheit (140) aufweist, die Versorgungseinheiten und/oder eine Steuerungselektronik enthält.

31. Waage (1) nach Anspruch 30, **dadurch gekennzeichnet, dass** die Zusatzeinheit in den das Gehäuse (3) bildenden feststehenden Teil der Waage integriert ist.

32. Waage (1) nach Anspruch 30 oder 31, **dadurch gekennzeichnet, dass** die Zusatzeinheit (140) Durchführungen (147) für Zufuhrleitungen (123) aufweist.

33. Waage (1) nach Anspruch 32, **dadurch gekennzeichnet, dass** die Zusatzeinheit (140) mit dem als Rückwand (9) des Wägeraums (4) ausgebildeten feststehenden Teil der Waage durch Führungsrinnen (143, 143') zur Aufnahme der Zufuhrleitungen (123) verbunden ist.

34. Waage (1) nach Anspruch 33, **dadurch gekennzeichnet, dass** die Führungsrinnen (143, 143') in den das Gehäuse (3) bildenden feststehenden Teil der Waage integriert sind und mittels Abdeckungen nach aussen verschliessbar sind.

## Claims

1. A balance (1) with a weighing compartment (4) that borders in part on a stationary part (8, 9) of the balance and is otherwise enclosed by at least one side wall panel (5, 6), a front wall panel (7), and a top cover panel (12); at least one of said panels being slidable by means of a guiding device (17, 120) to open and close the weighing compartment (4); **characterized in that** a holder arrangement (15, 17c, 58, 125) for the at least one slidable panel (5, 6, 12) is integrated in the guiding device (17, 120) and a holder arrangement (19) for any non-slidable wall panel (7) is integrated in the stationary part (8), wherein each of the holder arrangements (15, 19, 17c, 58, 125) holds as well as releases the respective panel (5, 6, 7, 12) by means of a form-locking closure device that can be locked and unlocked by a simple application of a force to the panel (5, 6, 7, 12) and/or the holder arrangement(15, 19, 17c, 58, 125).

2. A balance (1) according to claim 1, **characterized in that** a non-slidable wall panel that is configured as front wall panel (7) as well as each of the wall panels that are configured as side-wall panels (5, 6) and/or top-cover panel (12) can be individually locked as well as unlocked by a simple manual operation.

3. A balance (1) according to claim 1 or 2, **characterized in that** at least one of the holder arrangements (17c, 58, 125) belonging, respectively, to the non-slidable wall panel (7) and/or the slidable wall panel (5, 6, 12) comprises at least one snap-closure body (59).

4. A balance (1) according to claim 3, **characterized in that** on the stationary part (8, 9), which is configured as a rear wall (9), the balance comprises at least one snap-closure body (59) to attach the at least one slidable wall panel that is configured as side-wall panel (5, 6).

5. A balance (1) according to claim 3 or 4, **characterized in that** the at least one snap-closure body (59) comprises a vertical supporting portion (60), a tongue (61) protruding substantially horizontally from the vertical supporting portion (60) and containing a fulcrum hole (62) on which the snap-closure body (59) is rotatable, a spring member (63) bearing against a bolt (64) of the rear wall (9), and two parallel elastically flexible arms (68) connected by a leg (67).

6. A balance (1) according to one of the claims 3 to 5, **characterized in that** the snap-closure body (59) is configured as a single integral piece of polymer material.

7. A balance (1) according to one of the claims 4 to 6, **characterized in that** the at least one side wall panel (5, 6) is manually released from the snap-closure body (59) by an outward-directed tilting movement.

8. A balance (1) according to one of the claims 4 to 7, **characterized in that** it takes a greater amount of force to pull out a side wall panel (5, 6) that is attached to the snap-closure body (59) than it takes to snap the side wall panel (5, 6) into place.

9. A balance (1) according to one of the claims 1 to 8, **characterized in that** at the places where two of the wall panels (5, 6, 7, 12) meet each other, one wall panel has a groove (182) and the other wall panel reaches into the groove when both of the wall panels (5, 6, 7, 12) are in a closed position.

10. A balance (1) according to one of the claims 1 to 8, **characterized in that** at the places where two of the wall panels (5, 6, 7, 12) meet each other, one of the wall panels has an angle-shaped edge-covering piece (180) partially covering the other wall panel when both of the wall panels (5, 6, 7, 12) are in a closed position.

11. A balance (1) according to one of the claims 1 to 10, **characterized in that** drive means (38, 39) are provided for moving the at least one slidable wall panel (5, 6, 12).

12. A balance (1) according to claim 11, **characterized in that** the drive means are configured as cord-pulley drives (38, 39).

13. A balance (1) according to claim 12, **characterized in that** a first cord-pulley drive (38) is arranged in the upper part of the balance and a second cord-pulley drive (39) is arranged in the lower part of the balance, and wherein the cord-pulley drives (38, 39) are coupled to each other by a common rotary shaft (35).

14. A balance (1) according to one of the claims 11 to 13, **characterized in that** coupler devices (118, 119) are provided by which the at least one slidable panel (5, 6, 12) can be coupled to and uncoupled from the drive means (38, 39).

15. A balance (1) according to claim 14, **characterized in that** coupler levers (16, 18) are provided for manually actuating the coupler devices (118, 119).

16. A balance (1) according to one of the claims 14 or 15, **characterized in that** the coupler devices (119) comprise traveling coupler elements (106) and the coupler devices (119) are configured so that the position for the coupling engagement is found automatically.

17. A balance (1) according to claim 16, **characterized in that** the traveling coupler elements (106) of the coupler devices (119) have a notch (108) and ramps (107, 107') adjacent to the notch and descending on both sides away from the notch, wherein a coupler spring (154) slides up the ramp (107, 107') and snaps into the notch (108), when the wall panel (5, 6) is moved.

18. A balance (1) according to one of the claims 11 to 17, **characterized in that** the side wall panels (5, 6) and the top-cover panel (12) are configured as slidable wall panels, the side wall panels (5, 6) have travel distances between their open and closed positions different from the top-cover panel (12), and the drive means (38, 39) have appropriate transmission ratios to effect a synchronous movement.

19. A balance (1) according to one of the claims 11 to 18, **characterized in that** the drive means (38, 39) are powered by a single motor (28).

20. A balance (1) according to one of the claims 11 to 19, **characterized in that** more than one wall panel is slidable and wherein the slidable wall panels (5, 6, 7) can be driven selectively either individually by themselves, or all of them together, or in any conceivable combination.

21. A balance (1) according to claim 14, **characterized in that** by pushing manually in a desired direction of movement against any place of a wall panel (5, 6, 12) whose coupling is engaged, the drive means is set in motion to move that wall panel.

22. A balance (1) according to one of the claims 1 to 21, **characterized in that** the balance comprises a handle (13).

23. A balance (1) according to claim 22, **characterized in that** the handle (13) is configured as a rail for a guide element (14) of the guiding device (120) of the top cover panel (12).

24. A balance (1) according to claim 23, **characterized in that** the guide element (14) comprises a vertical body (78), wherein in each the upper and the lower part of the guiding device (120) at least one gear rack (73, 74) is provided, said gear rack meshing with a respective gear (73a, 74a) arranged on a vertical gear shaft (66) of the guiding element (14).

25. A balance (1) according to claim 23 or 24, **characterized in that** the guide element (14) is laterally constrained in the guiding device either in a gliding arrangement or by means of guide rollers (75, 76).

26. A balance (1) according to one of the claims 1 to 25, **characterized in that** in the at least one side-wall panel (5, 6), front-wall panel (7), top-cover panel (12) and/or in the stationary part (9) of the balance, cutout passages (20) are provided for cables and conduits (123).

27. A balance (1) according to claim 26, **characterized in that** the cutout passages (20) can be closed by means of clip-on covers (21, 21', 21", 113).

28. A balance (1) according to claim 27, **characterized in that** the cutout passages (20) are provided with clip-on devices (21") comprising equipment holders (130) for tools.

29. A balance (1) according to claim 27, **characterized in that** the cutout passages (20) are provided with clip-on devices (113) which in cooperation with holder rails (115) are provided as part of the guiding device for slidable side wall panels (114) of different height.

30. A balance (1) according to one of the claims 1 to 29, **characterized in that** the balance comprises an accessory unit (140) containing electric power supplies and/or control electronics.

31. A balance (1) according to claim 30 or 31, **characterized in that** the accessory unit (140) is integrated in the stationary part of the balance that forms the housing (3).

32. A balance (1) according to claim 30 or 31, **characterized in that** the accessory unit (140) comprises passages (147) for cables and conduits (123).

33. A balance (1) according to claim 32, **characterized in that** the accessory unit (140) is connected to the stationary part of the balance that forms the rear wall (9) of the weighing compartment (4) through guide channels (143, 143') in which the conduits and cables (123) are received.

34. A balance (1) according to claim 33, **characterized in that** the guide channels (143, 143') are integrated in the stationary part of the balance that forms the housing (3) and can be closed to the outside by means of covers.

## Revendications

1. Balance (1) avec un espace de pesée (4), qui est délimité partiellement par une partie fixe (8, 9) de la balance ainsi que par au moins une paroi latérale (5, 6), une paroi avant (7) et une paroi de recouvrement (12), dont au moins l'une des parois (5, 6, 12) peut être déplacée au moyen d'un dispositif de guidage (17, 120) pour l'ouverture et la fermeture de l'espace de pesée (4), **caractérisée en ce que** dans le dispositif de guidage (17, 120) est intégrée respectivement une fixation (15, 17c, 58, 125) pour la au moins une paroi (5, 6, 12) mobile et dans la partie fixe (8) une fixation (19) pour chaque paroi (7) non mobile, lesquelles fixations (15, 19, 17c, 58, 125) maintiennent ou libèrent la paroi respective (5, 6, 7, 12) au moyen d'une liaison mécanique pouvant être verrouillée et déverrouillée par une simple commande agissant sur la paroi (5, 6, 7, 12) et/ou la fixation (15, 19, 17c, 58, 125).

2. Balance (1) selon la revendication 1, **caractérisée en ce qu'**une paroi non mobile et conçue comme une paroi frontale (7) et chacune des parois mobiles conçues comme des parois latérales (5, 6) et/ou une paroi de recouvrement (12) peuvent être verrouillées et déverrouillées individuellement avec la fixation respective (15, 19, 17c, 58, 125) par une simple commande manuelle.

3. Balance (1) selon la revendication 1 ou 2, **caractérisée en ce qu'**au moins l'une des fixations (17c, 58, 125) présente au moins un corps d'encliquetage (59) pour la paroi (7) respectivement non mobile et/ou la paroi (5, 6, 12) respectivement mobile.

4. Balance (1) selon la revendication 3, **caractérisée en ce qu'**elle présente sur la partie de la balance fixe (9) et conçue comme une paroi arrière au moins un corps d'encliquetage (59) pour l'engagement de au moins une paroi mobile conçue comme paroi latérale (5, 6).

5. Balance (1) selon la revendication 3 ou 4, **caractérisée en ce que** le corps d'encliquetage (59) présente une partie support (60) verticale, une languette (61) qui s'étend largement horizontalement à partir de la partie support (60) avec un bossage de palier (62), autour duquel le corps d'encliquetage (59) peut pivoter, un ressort (63) s'appuyant sur un boulon de support (64) et deux bras oscillants (68) montés sur ressort, parallèles et reliés l'un à l'autre par une branche (67).

6. Balance (1) selon l'une quelconque des revendications 3 à 5, **caractérisée en ce que** le corps d'encliquetage (59) est conçu comme un corps plastique d'une seule pièce.

7. Balance (1) selon l'une quelconque des revendications 4 à 6, **caractérisée en ce que** le déverrouillage de au moins une paroi latérale (5, 6) du corps d'encliquetage (59) s'effectue manuellement par un mouvement de pivotement vers l'extérieur.

8. Balance (1) selon l'une quelconque des revendications 4 à 7, **caractérisée en ce que** la force nécessaire pour l'extraction d'une paroi latérale (5, 6) engagée dans le corps d'encliquetage (59) est supérieure à celle nécessaire pour l'engagement de la paroi latérale (5, 6).

9. Balance (1) selon l'une quelconque des revendications 1 à 8, **caractérisée en ce que**, aux emplacements de la rencontre de deux parois (5, 6, 7, 9, 12), une paroi présente une cavité (182) dans laquelle s'engage la seconde paroi dans la position fermée respective des deux parois (5, 6, 7, 12).

10. Balance (1) selon l'une quelconque des revendications 1 à 8, **caractérisée en ce que**, aux emplacements de la rencontre de deux parois (5, 6, 7, 9, 12), une paroi présente un cache (180) angulaire, qui recouvre la seconde paroi dans la position fermée respective des deux parois (5, 6, 7, 12).

11. Balance (1) selon l'une quelconque des revendications 1 à 10, **caractérisée en ce qu'**il y a des moyens d'entraînement (38, 39) pour le déplacement d'au moins une paroi mobile (5, 6, 12).

12. Balance (1) selon la revendication 11, **caractérisée en ce que** les moyens d'entraînement sont conçus comme des commandes par câbles (38, 39).

13. Balance (1) selon la revendication 12, **caractérisée en ce qu'**une première commande par câble (38) et une seconde commande par câble (39) sont disposées respectivement dans la zone supérieure et dans la zone inférieure de la balance et les deux commandes par câble (38, 39) sont liées par un arbre commun (35).

14. Balance (1) selon l'une quelconque des revendications 11 à 13, **caractérisée en ce qu'**il y a des dispositifs d'accouplement (118, 119) qui permettent un accouplement et un désaccouplement de la au moins une paroi mobile (5, 6, 12) par rapport aux moyens d'entraînement (38, 39).

15. Balance (1) selon la revendication 14, **caractérisé en ce qu'**il y a des leviers (16, 18) pour une commande manuelle des dispositifs d'accouplement (118, 119).

16. Balance (1) selon la revendication 14 ou 15, **caractérisée en ce que** les dispositifs d'accouplement (119) présentent des éléments d'entraînement (106) et sont conçus de telle façon que l'opération d'accouplement s'effectue automatiquement.

17. Balance (1) selon la revendication 16, **caractérisée en ce que** les éléments d'entraînement (106) des dispositifs d'accouplement (119) présentent une encoche (108) et des rampes (107, 107') s'y raccordant des deux côtés et descendant vers l'extérieur, par lesquels un ressort à cran d'arrêt (154) s'engage en glissant dans l'encoche (108) lors du déplacement de la paroi (5, 6).

18. Balance (1) selon l'une quelconque des revendications 11 à 17, **caractérisée en ce que** les parois latérales (5, 6) et la paroi de recouvrement (12) sont conçues comme des parois mobiles et les parois latérales (5, 6) présentent par rapport à la paroi de recouvrement (12) des courses de fermeture et d'ouverture différentes et **en ce que** les moyens d'entraînement (38, 39) présentent des rapports de transmission appropriés pour le déplacement synchrone.

19. Balance (1) selon l'une quelconque des revendications 11 à 18, **caractérisée en ce que** les moyens d'entraînement (38, 39) sont entraînés par un seul moteur (28).

20. Balance (1) selon l'une quelconque des revendications 11 à 19, **caractérisée en ce que** plus d'une paroi est mobile et **en ce que** les parois mobiles (5, 6, 7) peuvent être entraînées individuellement, ensemble ou dans toute combinaison concevable.

21. Balance (1) selon la revendication 14, **caractérisée en ce que**, par une pression manuelle sur un endroit quelconque de l'une des parois (5, 6, 12) mobiles et accouplées en direction du déplacement souhaitée, le moyen d'entraînement pour le déplacement de cette paroi est mis en marche.

22. Balance (1) selon l'une quelconque des revendications 1 à 21, **caractérisée en ce que** la balance présente une poignée (13).

23. Balance (1) selon la revendication 22, **caractérisée en ce que** la poignée (13) est conçue comme un rail pour un élément de guidage (14) du dispositif de guidage (120) de la paroi de recouvrement (12).

24. Balance (1) selon la revendication 23, **caractérisée en ce que** l'élément de guidage (14) présente un corps de base (78) vertical, moyennant quoi il est prévu dans la zone supérieure et la zone inférieure du dispositif de guidage (120) respectivement au moins une crémaillère (73, 74), qui est en prise avec respectivement au moins une roue dentée (73a, 74a), disposée sur un arbre (66) vertical, de l'élément de guidage (14).

25. Balance (1) selon la revendication 23 ou 24, **caractérisée en ce que** l'élément de guidage (14) est guidé en glissant latéralement ou au moyen de galet de guidage (75, 76) dans le dispositif de guidage (120).

26. Balance (1) selon l'une quelconque des revendications 1 à 25, **caractérisée en ce que** des évidements (20) pour le passage d'arrivées (123) sont prévus dans la au moins une paroi latérale (5, 6), la paroi frontale (7), la paroi de recouvrement (12) et/ou dans la partie fixe de la balance (9).

27. Balance (1) selon la revendication 26, **caractérisée en ce que** les évidements (20) peuvent être fermés au moyen de clips (21, 21', 21", 113).

28. Balance (1) selon la revendication 27, **caractérisée en ce que** les évidements (20) sont pourvus de clips (21"), qui présentent des fixations (130) pour la fixation de l'outil.

29. Balance (1) selon la revendication 27, **caractérisée en ce que** les évidements (20) sont pourvus de clips (113), qui sont prévus dans une interaction avec des supports (115) comme partie du dispositif de guidage pour des parois (114) mobiles de hauteur différente.

30. Balance (1) selon l'une quelconque des revendications 1 à 29, **caractérisée en ce que** la balance présente une unité supplémentaire (140), qui contient des unités d'alimentation et/ou une électronique de commande.

31. Balance (1) selon la revendication 30, **caractérisée en ce que** l'unité supplémentaire est intégrée dans la partie, fixe et formant le boîtier (3), de la balance.

32. Balance (1) selon la revendication 30 ou 31, **caractérisée en ce que** l'unité supplémentaire (140) présente des passages (147) pour des arrivées (123).

33. Balance (1) selon la revendication 32, **caractérisée en ce que** l'unité supplémentaire (140) est reliée à la partie fixe de la balance, conçue comme une paroi arrière (9) de l'espace de pesée (4), par des goulottes de guidage (143, 143') pour le logement des arrivées (123).

34. Balance (1) selon la revendication 33, **caractérisée en ce que** les goulottes de guidage (143, 143') sont intégrées dans la partie fixe de la balance, formant le boîtier (3), et peuvent être fermées vers l'extérieur au moyen de recouvrements.
